# EUROPÄISCHE PATENTSCHRIFT

(11) **EP 2 155 501 B1**
(45) Veröffentlichungstag und Bekanntmachung des Hinweises auf die Patenterteilung: **21.08.2013**
(21) Anmeldenummer: 08758577.4
(22) Anmeldetag: 16.05.2008
(51) Int. Cl.: B42D 15/00, B42D 15/10, G03H 1/30

(54) **MEHRSCHICHTKÖRPER**
MULTI-LAYER BODY
CORPS MULTICOUCHE

(30) Priorität: 21.05.2007 DE 102007023560
(43) Veröffentlichungstag der Anmeldung: 24.02.2010
(73) Patentinhaber: OVD Kinegram AG, 6301 Zug (CH)
(72) Erfinder: TOMPKIN, Wayne Robert, CH-5400 Baden (CH); SCHILLING, Andreas, CH-6332 Hagendorn (CH)
(74) Vertreter: Zinsinger, Norbert
(86) Internationale Anmeldenummer: PCT/EP2008/003949
(87) Internationale Veröffentlichungsnummer: WO 2008/141773

(56) Entgegenhaltungen:
- EP-A- 0 821 293
- EP-A- 0 956 975
- WO-A-2004/008193
- WO-A-2006/002756
- WO-A-2007/042177
- WO-A-2007/115785
- US-A- 5 098 176
- US-A1- 2006 275 671

## Beschreibung

Die Erfindung betrifft einen Mehrschichtkörper mit optisch wirkenden Elementen.

DE 43 34 847 A1 beschreibt ein Wertdokument mit einer fensterartigen, mittels eines lichtdurchlässigen Films verschlossenen Durchbrechung, der als Sicherheitsmerkmal eine brechungs- und/oder beugungsoptisch wirksame Diffraktionsstruktur und/oder Dünnschichtanordnung aufweist.

Aus WO 98/15418 ist ein selbst-verifizierendes Sicherheitsdokument bekannt, das ein mit einem transparenten Kunststoffmaterial verschlossenes Fenster sowie ein Sicherheitselement aufweist. Das transparente Kunststoffmaterial weist im Bereich des Fensters ein Verifizierungsmittel, zum Beispiel eine optische Linse, eine polarisierende Struktur oder ein Element zur Erzeugung eines Moire-Effekts, auf. Zur Verifzierung des Sicherheitsdokuments wird das Sicherheitsdokument so gefaltet, dass das Fenster mit dem Sicherheitselement in Deckung gebracht wird und das Sicherheitselement durch das Fenster betrachtet werden kann. Durch das Zusammenwirken von Verifizierungsmittel und Sicherheitselement ergibt sich ein besonderer optischer Effekt.

In EP 0 435 029 82 ist ein Datenträger, z.B. ein Wertpapier oder eine Ausweiskarte, mit einem Flüssigkristall-Sicherheitselement beschrieben, bei dem unter dem Sicherheitselement eine visuell nicht sichtbare Kodierung aufgebracht ist. Das Sicherheitselement vermittelt bei unterschiedlichen Betrachtungswinkeln unterschiedliche Farbeindrücke. Ein derartiger Flüssigkristall wird auch bei einem Produkt namens Varifeye^{®} eingesetzt. Es handelt sich bei diesem Produkt um eine Banknote aus Papier, in die - in einer ähnlichen Weise wie ein Wasserzeichen - ein Fenster eingebracht wird. Eine transparente Kunststofffolie, in die der Flüssigkristall und ein diffraktives OVD eingebracht sind, bedeckt das Fenster (OVD = Optically Variable Device). Abhängig von der Helligkeit des Hintergrundes zeigt das Fenster unterschiedliche Farbeffekte. Optional kann in dem Fenster hinter dem Flüssigkristall ein beispielsweise schwarzer Aufdruck angeordnet sein, so dass ein Betrachter eine Farbverschiebung wahrnimmt, auch wenn das Fenster nicht vor einem dunklen Hintergrund betrachtet wird.

Der Erfindung liegt nun die Aufgabe zugrunde, einen Mehrschichtkörper mit einem verbesserten optisch wirkenden Element bereitzustellen.

Die Aufgabe der Erfindung wird gelöst durch einen Mehrschichtkörper, insbesondere ein Sicherheitsdokument, mit einem Trägersubstrat und mit einer transparenten Schicht, die zumindest teilweise in einem Fenster oder in einem transparenten Bereich des Trägersubstrats angeordnet ist, wobei die transparente Schicht mindestens einen ersten und einen zweiten Teilbereich mit variierender Brechzahl aufweist, die in der von der transparenten Schicht aufgespannten Schichtebene nebeneinander angeordnet sind, wobei der mindestens erste und der mindestens zweite Teilbereich zumindest teilweise in dem Fenster oder in dem transparenten Bereich des Trägersubstrats angeordnet sind, wobei jeder der Teilbereiche eine Vielzahl periodisch angeordneter, ein optisch wirkendes Element ausbildender, durch Brechzahlvariation gebildeter Knoten, die in im wesentlichen parallel zueinander verlaufenden Ebenen angeordnet sind, aufweist, und wobei die Ebenen in dem mindestens ersten Teilbereich nicht parallel zu den Ebenen in dem mindestens zweiten Teilbereich sind, und wobei mindestens in einem der Teilbereiche die Ebenen weder parallel noch senkrecht zu der Schichtebene verlaufen, so dass sowohl das auf die Vorderseite als auch das auf die Rückseite des Sicherheitselementes fallende Licht durch die optisch wirkenden Elemente gebeugt wird und die Elemente im Auflicht eine in Vorderansicht und in Rückansicht unterschiedliche optische Wirkung ausbilden.

Der erfindungsgemäße Mehrschichtkörper zeichnet sich durch besondere optische Effekte aus. Durch die Anordnung der optischen wirkenden Elemente in einem Fenster oder in einem transparenten Bereich des Trägersubstrats kann eine Beleuchtung der optischen wirkenden Elemente von beiden Seiten des Sicherheitsdokuments her erfolgen. Unter einem Fenster wird im Folgenden ein transparenter Bereich des Sicherheitsdokuments verstanden, den Licht von beiden Seiten her durchdringen kann. Transparent bedeutet lichtdurchlässig, vorzugsweise durchsichtig. Diese Transparenz kann auch nur für einen beschränkten Spektralbereich gegeben sein, z.B. für rotes Licht. Erfolgt der Einfall von Licht auf die Seite des Fensters, die einem Betrachter zugewandt ist, so spricht man von Auflicht. Fällt Licht auf die Seite des Fensters, die einem Betrachter abgewandt ist, so spricht man von Durchlicht.

Durch eine Anordnung von mindestens zwei unterschiedlich ausgebildeten Teilbereichen in dem Fenster kann eine Ausbildung nichttransparenter reflektierender Bilder in einem transparenten Fenster erzielt werden, die für den Betrachter besonders einprägsam ist. Je nach Orientierung der Ebenen in den mindestens zwei Teilbereichen, dem Einfallswinkel von Licht auf den Mehrschichtkörper und dem Betrachtungswinkel des Mehrschichtkörpersergeben sich unterschiedliche optische Wirkungen. Ein Betrachter nimmt bei Betrachtung der Vorderseite des Mehrschichtkörpers im Auflicht in dem Fenster eine erste Bildinformation wahr. Wird das Sicherheitsdokument um 180 Grad um eine in der Ebene des Mehrschichtkörpers liegende Achse gewendet und der Mehrschichtkörper von der Rückseite betrachtet, so nimmt der Betrachter im Auflicht in dem Fenster anstatt der ersten Bildinformation eine hiervon unterschiedliche zweite Bildinformation wahr. Bei einer in der Ebene des Mehrschichtkörpers liegenden Achse kann es sich z.B. um eine Achse parallel zu einer Längskante oder zu einer Hochkante des Mehrschichtkörpers handeln. Bei einer Rotation des Mehrschichtkörpers um 180 Grad um eine senkrecht auf der Ebene des Mehrschichtkörpers stehende Achse treten andere Effekte auf, z.B. ein Kontrast dunkel/hell/dunkel zu dunkel/hell.

Der erfindungsgemäße Mehrschichtkörper zeichnet sich außerdem dadurch aus, dass die beschriebenen optisch wirkenden Elemente derartig ausgebildet sind, dass sie einfallendes Licht in enge Winkelbereiche ablenken bzw. beugen. Diese Winkelbereiche sind viel enger als bei typischen diffraktiven Strukturen, z.B. diffraktiven Reliefstrukturen. Dadurch wird eine sehr selektive optische Wirkung erreicht, d.h. ein Betrachter des Mehrschichtkörpers nimmt die optische Wirkung nur in einem sehr begrenzten, genau definierten Winkelbereich wahr.

Insbesondere kann mit dem erfindungsgemäßen Mehrschichtkörpererreicht werden, dass eine Bildinformation, die in dem optisch wirkenden Element enthalten ist, nur unter ganz speziellen Beleuchtungssituationen sichtbar wird. Für einen Betrachter des Mehrschichtkörpers ergibt sich, wenn er den Mehrschichtkörper kippt, dadurch ein unverkennbarer, scharfer Wechsel zwischen Bildinformation und fehlender Bildinformation.

Vorzugsweise handelt es sich bei dem Mehrschichtkörper um ein Sicherheitsdokument. Der Mehrschichtkörper kann jedoch auch im dekorativen Bereich Verwendung finden.

Weitere vorteilhafte Ausgestaltungen sind in den Unteransprüchen beschrieben.

Es kann vorgesehen sein, dass die optisch wirkenden Elemente im Durchlicht eine optisch variable Wirkung entfalten. Ein optisch wirkendes Element kann z.B. so in dem Fenster oder dem transparenten Bereich des Trägersubstrats angeordnet sein, dass das optisch wirkende Element im Durchlicht betrachtet werden kann. Vorzugsweise zeigt die transparente Schicht des Mehrschichtkörpersim Auflicht eine andere Bildinformation als im Durchlicht betrachtet.

Durch die Anordnung von mindestens zwei unterschiedlich ausgebildeten Teilbereichen in dem Fenster kann eine Ausbildung nichttransparenter reflektierender Bilder in einem transparenten Fenster erzielt werden, die für den Betrachter besonders einprägsam ist. Je nach Orientierung der Ebenen in den mindestens zwei Teilbereichen, dem Einfallswinkel von Licht auf den Mehrschichtkörper und dem Betrachtungswinkel des Mehrschichtkörpersergeben sich unterschiedliche optische Wirkungen. So ist es z.B. möglich, dass ein Betrachter bei Betrachtung der Vorderseite eines Sicherheitsdokuments im Durchlicht in dem Fenster eine erste Bildinformation wahrnimmt. Wird das Sicherheitsdokument bei sonst unverändertem Lichteinfall und Betrachtungswinkel um 180 Grad gewendet, so nimmt der Betrachter im Durchlicht in dem Fenster anstatt der ersten Bildinformation eine zweite Bildinformation wahr.

In einer bevorzugten Ausgestaltung der Erfindung sind die Ebenen in dem ersten Teilbereich gegenüber den Ebenen in dem zweiten Teilbereich verkippt, vorzugsweise um einen Winkel von mindestens 1 Grad. Damit liegen die Ebenen des Ebenenpakets in dem ersten Teilbereich nicht parallel zu den Ebenen des Ebenenpakets in dem zweiten Teilbereich, und der Schnittwinkel beider Ebenenpakete beträgt mindestens 1 Grad. Es kann vorgesehen sein, dass die im wesentlichen parallel zueinander verlaufenden Ebenen in einem ersten der Teilbereiche eine erste Bildinformation enthalten, die einem Betrachter des Sicherheitsdokuments durch Ablenkung bzw. Beugung von Licht an den Ebenen sichtbar wird. Weiter kann vorgesehen sein, dass die im wesentlichen parallel zueinander verlaufenden Ebenen in einem zweiten der Teilbereiche eine zweite Bildinformation enthalten, die einem Betrachter des Sicherheitsdokuments durch Ablenkung bzw. Beugung von Licht an den Ebenen sichtbar wird.

Wenn nun die Ebenen in dem ersten Teilbereich sich in ihrer Orientierung ausreichend von der Orientierung der Ebenen in dem zweiten Teilbereich unterscheiden, nimmt ein Betrachter in einer ersten Beleuchtungssituation die erste Bildinformation und in einer zweiten Beleuchtungssituation die zweite Bildinformation wahr. Als ausreichend wird hier ein Winkel verstanden, vorzugsweise ein Winkel größer oder gleich 1 Grad, bei dem sich die erste und die zweite Bildinformation nicht überlagern und der Betrachter klar voneinander abgegrenzte Bildinformationen wahrnimmt.

Beispielsweise ist eine aus zwei Ziffern bestehende Zahl, z.B. die Zahl "50", durch zwei verschiedene Teilbereiche mit verschiedener Orientierung der Ebenen ausgebildet, wobei die erste Ziffer "5" als ein Teilbereich mit einer ersten Orientierung der Ebenen und die zweite Ziffer "0" als ein Teilbereich mit einer zweiten Orientierung der Ebenen ausgebildet ist. Auf diese Weise ist es z.B. möglich, dass die erste Ziffer rot und die zweite Ziffer grün erscheint.

Vorzugsweise weist jeder der Teilbereiche in der Schichtebene eine Flächenausdehnung auf, die in jeder Richtung innerhalb der Schichtebene mindestens 20 µm beträgt. Vorzugsweise beträgt diese minimale Flächenausdehnung 300 µm. Durch diese Flächenausdehnung wird ein Teilbereich von dem unbewaffneten menschlichen Auge stets als zusammenhängendes Gebilde wahrgenommen.

Weiter kann vorgesehen sein, dass jeder der Teilbereiche ein optisch wirkendes Element aufweist, das als ein mittels einer speziellen Abbildungstechnik erzeugtes Volumenhologramm ausgebildet ist. Jedes der Volumenhologramme weist durch Brechzahlvariation gebildete Knoten auf. Im Idealfall sind die Knoten so gestaltet, dass sie sogenannte Braggsche Ebenen ausbilden, d.h. durch Brechzahlvariation gebildete Ebenen. Die Brechzahländerungen sind also in den Braggschen Ebenen lokalisiert, die zuerst in Verbindung mit der Röntgenstrukturanalyse von Kristallen beschrieben wurden. Die Braggschen Ebenen wirken bei einfallendem Licht als Beugungsgitter und bilden durch Beugung und Interferenz eine optische Wirkung aus.

Bei dieser Ausgestaltung stellen die in den Teilbereichen durch Brechzahlvariation gebildeten Knoten, die in den im wesentlichen parallel zueinander verlaufenden Ebenen angeordnet sind, die Braggschen Ebenen der Volumenhologramme dar. Die im wesentlichen parallel zueinander verlaufenden Ebenen bilden ihrerseits die Braggschen Ebenen der Volumenhologramme. Die Ausrichtung der Ebenen wird beispielsweise mittels der weiter unten beschriebenen speziellen Abbildungstechnik wie oben beschrieben realisiert, so dass die optisch wirkenden Elemente als spezielles Volumenhologramm realisiert sind.

Vorzugsweise zeichnet sich die transparente oder semi-transparente Schicht, die in oder auf dem erfindungsgemäßen Sicherheitsdokument angeordnet ist, durch optimal ausgeführte Volumenhologramme aus, deren Dicke durch die optischen Gesetze der Ausbildung von Volumenhologrammen nach unten begrenzt sind. Die transparente Schicht kann deshalb auch in einem Sicherheitsdokument eingesetzt werden, das während des Gebrauchs auf Biegung beansprucht wird, wie es beispielsweise bei Banknoten der Fall ist. Weil das Volumenhologramm in einer transparenten Schicht ausgebildet ist, ist der unerwartete optische Effekt der Ausbildung nichttransparenter reflektierender Bilder in einem transparenten Fenster besonders einprägsam.

Im Vergleich zu herkömmlichen diffraktiven Strukturen (Regenbogen-Hologrammen) ist bei den in dem erfindungsgemäßen Sicherheitsdokument ausgebildeten Volumenhologrammen der Kontrast höher, und es ist auch möglich, in ihnen Phaseninformationen zu speichern. Dadurch können weitgehend einfarbige, helle Bilder erzeugt werden, die nur in einem relativ engen Betrachtungswinkel wahrgenommen werden.

Es kann vorgesehen sein, dass die Volumenhologramme in der transparenten Schicht durch eine optische Kontaktkopie eines Masters erzeugt werden, in den miteinander verschachtelte Bereiche mit unterschiedlichen asymmetrischen Oberflächenstrukturen oder Kinoform-Strukturen abgeformt sind, welche unterschiedliche Bildinformationen beinhalten. Durch gezielte Wahl dieser Strukturen werden die optisch wirkenden Elemente so ausgebildet, dass in den mindestens zwei Teilbereichen die Braggsche Ebenen wie oben spezifiziert ausgerichtet sind und im Auflicht zwei unterschiedliche Bildinformationen erzeugen, die unter unterschiedlichen Betrachtungswinkeln wahrgenommen werden. Es kann auch vorgesehen sein, durch gezielte Wahl dieser Strukturen die optisch wirkenden Elemente so auszubilden, dass die mindestens zwei Teilbereiche im Durchlicht zwei unterschiedliche Bildinformationen erzeugen, die unter unterschiedlichen Betrachtungswinkeln wahrgenommen werden.

Vorzugsweise werden die Strukturen so gewählt, dass die dadurch in einem ersten Teilbereich ausgebildeten Ebenen und die dadurch in einem zweiten Teilbereich ausgebildeten Ebenen weder parallel noch senkrecht zu der Schichtebene verlaufen und dass die Ebenen in dem ersten Teilbereich nicht parallel zu den Ebenen in dem zweiten Teilbereich orientiert sind.

In einer bevorzugten Ausgestaltung der Erfindung sind die Teilbereiche miteinander verschachtelt. Die Verschachtelung ist so ausgestaltet, dass der erste Teilbereich aus einer Vielzahl von in der Schichtebene nebeneinander angeordneten ersten Einzeibereichen besteht, der zweite Teilbereich aus einer Vielzahl von in der Schichtebene nebeneinander angeordneten zweiten Einzelbereichen besteht, und die ersten und zweiten Einzelbereiche in beliebiger Anordnung in der Schichtebene nebeneinander angeordnet sind.

Es ist möglich, dass ein erster Teilbereich, bestehend aus einer Vielzahl von Einzelbereichen, ein erstes Volumenhologramm mit einer ersten Bildinformation aufweist, und ein zweiter Teilbereich, bestehend aus einer Vielzahl von Einzelbereichen, ein zweites Volumenhologramm mit einer zweiten Bildinformation aufweist. Durch die Verschachtelung der Einzelbereiche des ersten Teilbereichs und der Einzelbereiche des zweiten Teilbereichs bildet bei einer ersten Beleuchtungssituation der erste Teilbereich ein erstes volumenholografisches Abbild aus, und bei einer zweiten Beleuchtungssituation der zweite Teilbereich ein zweites volumenholografisches Abbild aus. Beispielsweise erkennt ein Betrachter des Sicherheitsdokuments im Auflicht ein erstes, vom ersten Teilbereich generiertes, volumenholografisches Abbild, und - wenn er das Sicherheitsdokument verkippt - ein zweites, vom zweiten Teilbereich generiertes, volumenholografisches Abbild.

Die Bereiche können auf unterschiedliche Weise miteinander verschachtelt sein. Es kann sich beispielsweise um miteinander verschachtelte Raster handeln, beispielsweise um Linienraster. Dabei kann der eine Bereich beispielsweise eine Textinformation wiedergeben und der andere Bereich eine Bildinformation. Es kann aber auch vorgesehen sein, dass der eine Bereich eine Information bereitstellt und der andere Bereich das Umfeld bildet, von dem sich die Information abhebt. Bei der Information kann es sich beispielsweise um ein Logo handeln, das in der einen Betrachtungslage hell vor einem dunklen Hintergrund erscheint und in der anderen Betrachtungslage dunkel vor einem hellen Hintergrund. Es kann also vorgesehen sein, dass beim Kippen oder Bewegen des Volumenhologramms ein Wechsel von einer Positiv-Darstellung zu einer Negativ-Darstellung eintritt und umgekehrt. Weiter können die Bereiche so ausgebildet sein, dass der eine Bereich den Rand des anderen Bereiches bildet. So kann der eine Bereich beispielsweise die Umrandung eines alphanumerischen Zeichens wiedergeben und der andere Bereich das alphanumerische Zeichen selbst.

In einer bevorzugten Ausgestaltung der Erfindung sind die Teilbereiche mit den mindestens zwei Bildinformationen in einem Raster mit einer Rasterweite von kleiner 300 µm, vorzugsweise von 20 µm bis 50 µm angeordnet sind. Unter besonders günstigen Bedingungen, d.h. bei Betrachtung kontrastreicher Motive bei guter Beleuchtung liegt die Grenze des Auflösungsvermögens des menschlichen Auges bei 300 µm. Das Auflösungsvermögen kann sich bei geringem Kontrast und ungünstiger Beleuchtung um den Faktor 3 bis 5 verschlechtern. Rasterweiten von 20 µm bis 50 µm können also durch das unbewaffnete menschliche Auge nicht mehr aufgelöst werden, so dass die Rasterung der Bildinformation nicht wahrnehmbar ist und der jeweils sichtbare Bereich als homogener Bereich erscheint.

Weiter kann vorgesehen sein, dass es sich bei dem Raster um ein Streifenraster handelt. Ein Streifenraster ist besonders einfach realisierbar. Es können aber auch andere Raster vorgesehen sein, insbesondere wenn mehr als zwei unterschiedliche Bildinformationen ineinander verschachtelt werden sollen. Es kann sich beispielsweise um einen Pixel-Raster handeln, wobei der Master mittels Elektronenstrahltechnologie herstellbar ist. Durch die Rasterung ist gewährleistet, dass die Bildinformationen auch im Volumenhologramm voneinander getrennt sind, so dass Helligkeits- und/oder Schärfeverluste durch Überlagerung von Bildinformationen im Volumenhologramm nicht auftreten.

Es ist auch möglich, dass die optisch wirkenden Elemente - anstatt durch streng voneinander abgegrenzte verschachtelte Bereiche, z.B. unter Verwendung von Rasterbildern - mittels zusammenhängender Bereiche ausgebildet sind, z.B. unter Verwendung von Guillochen. Unter einer Guilloche wird ein Ornament aus mehreren ineinander verwickelten und überlappenden Linienzügen verstanden, wobei die einzelnen Linien dabei schnurartig, oft asymmetrische, geschlossene Ellipsen oder auch Kreisbahnen bilden. Es ist z.B. möglich, dass ein Volumenhologramm realisiert ist, wo sich die Guilloche für den Betrachter zu drehen scheint, wenn die transparente Schicht hin- und hergekippt wird. Dies kann dadurch erreicht werden, dass jede Linie der Guilloche einen unterschiedlichen Azimut aufweist. Der Master zur Erzeugung des Guilloche-Hologramms ist dabei als Blazegitter ausgebildet, wobei jede Phase der Guilloche einen unterschiedlichen Azimut zwischen -45 und +45 Grad aufweist.

Es kann weiter vorgesehen sein, dass die Ebenen des ersten Teilbereichs mit der Schichtebene einen Winkel zwischen mehr als 45 Grad und weniger als 90 Grad einschließen. Vorzugsweise sind die Ebenen des ersten Teilbereichs annähernd senkrecht zu der Schichtebene angeordnet, insbesondere mit der Schichtebene einen Winkel von mindestens 80 Grad, aber kleiner als 90 Grad einschließend. Auf diese Weise wird Licht, das annähernd senkrecht auf die Rückseite des Sicherheitsdokuments fällt, an den Ebenen des ersten Teilbereichs durch das Fenster bzw. den transparenten Bereich hindurch gebeugt. Die in den Ebenen des ersten Teilbereichs gespeicherte Bildinformation wird auf diese Weise von einem Betrachter in Durchlicht wahrgenommen. Zusätzlich kann auch vorgesehen sein, dass die Ebenen des zweiten Teilbereichs mit der Schichtebene einen Winkel von höchstens 30 Grad einschließen. In diesem Fall wirken die beiden Teilbereiche so zusammen, dass die Ebenen des ersten Teilbereichs eine optische Wirkung in Transmission (= in Durchlicht) ausbilden, und die Ebenen des zweiten Teilbereichs eine optische Wirkung in Reflexion (= in Auflicht) ausbilden.

Insbesondere kann vorgesehen sein, dass in dem ersten Teilbereich ein Transmissions-Volumenhologramm ausgebildet ist, dessen Braggsche Ebenen annähernd senkrecht auf der Schichtebene stehen. Dadurch wird auf der Rückseite des Sicherheitselements annähernd senkrecht zur Schichtebene einfallendes, durch das Transmissions-Volumenhologramm hindurchtretendes Licht von der Normalen der Schichtebene weg gebeugt. Zusätzlich kann vorgesehen sein, dass in dem zweiten Teilbereich ein Reflexions-Volumenhologramm ausgebildet ist, bei dem auf der Vorderseite des Sicherheitselements einfallendes Licht reflektiert wird.

Beispielsweise enthält das Transmissions-Volumenhologramm eine erste Bildinformation, z.B. ein Quadrat, und das Reflexions-Volumenhologramm eine zweite Bildinformation, z.B. einen Stern. Wenn nun das Licht auf die Vorderseite des Sicherheitsdokuments fällt und diese Vorderseite des Sicherheitsdokument betrachtet wird, wird die Bildinformation des Reflexions-Volumenhologramms, d.h. der Stern, sichtbar. Andererseits, wenn das Licht auf die Rückseite des Sicherheitsdokuments fällt und die Vorderseite des Sicherheitsdokument betrachtet wird, beleuchtet das Licht durch das Fenster hindurch das Transmissions-Volumenhologramm, und die Bildinformation des Transmissions-Volumenhologramms, d.h. das Quadrat, wird sichtbar.

Vorzugsweise ist die transparente Schicht als photosensitive Schicht ausgebildet und weist vorzugsweise eine Dicke zwischen 5 µm und 30 µm auf. Die optimale Stärke der transparenten Schicht ist unter anderem von dem verwendeten Material abhängig und kann durch Versuche ermittelt werden. Im Vergleich zu diffraktiven Reliefstrukturen mit einer Standard-Profiltiefe im Bereich von wenigen 100 nm weist die transparente Schicht eine relativ große Dicke auf. Der Grund ist darin zu sehen, dass bei einem Volumenhologramm die Bildinformation in einem Volumen gespeichert ist und nicht - wie bei einer diffraktiven Reliefstruktur - in einer einzigen Grenzfläche (dem diffraktiven Oberflächenrelief).

In einer bevorzugten Ausgestaltung der Erfindung ist die transparente Schicht teilweise in einem opaken Bereich des Trägersubstrats, vorzugsweise in einem dunkel eingefärbten Bereich des Trägersubstrats, angeordnet. Es kann vorgesehen sein, dass der mindestens erste und der mindestens zweite Teilbereich zumindest teilweise in dem opaken Bereich des Trägersubstrats angeordnet sind. Es kann auch vorgesehen sein, dass sowohl in dem opaken Bereich als auch in dem transparenten Bereich des Sicherheitsdokuments jeweils ein mindestens erster und ein mindestens zweiter Teilbereich angeordnet ist, wobei die Bildinformation in den jeweils ersten Teilbereichen identisch ist und die Bildinformation in den jeweils zweiten Teilbereichen identisch ist. Vorzugsweise sind in den jeweils ersten und jeweils zweiten Teilbereichen Volumen hologramme angeordnet.

Das Volumenhologramm vor dem dunklen Hintergrund ist sehr gut sichtbar. Aufgrund der wahrgenommenen Farbwirkung und Helligkeit des Volumenhologramms kann das Volumenhologramm eine ähnliche Funktion wie ein bekanntes Folienfenster besitzen, das je nach Hintergrund eine dunkle oder eine helle Fläche zeigt, d.h. bei dem der sichtbare Folienbereich je nach Helligkeit verändert wird. Betrachtet man die Vorderseite des Sicherheitsdokuments, kann ein Betrachter hinter dem transparenten Bereich des Sicherheitsdokuments abwechselnd ein dunkles und ein helles Objekt anordnen. Je nach Helligkeit des Hintergrunds verändert sich die wahrgenommenen Farbwirkung und Helligkeit des Volumenhologramms. Das Volumenhologramm in dem opaken Bereich dient dabei als Referenz. Falls der Hintergrund des Volumenhologramms in dem opaken Bereich dunkel ist, z.B. mit einer dunklen Farbe bedruckt ist, nimmt der Betrachter das Volumenhologramm in dem opaken Bereich als farbiger und heller wahr als das in dem transparenten Bereich angeordnete Volumenhologramm.

Es ist möglich, dass die Unterseite der transparenten Schicht mit dunkler Tinte bedruckt wird, z.B. die Unterseite der transparenten Schicht, in der die Volumenhologramme angeordnet sind. Vorzugsweise ist dieser Druck als partieller Aufdruck mit kleinen bedruckten Bereichen in dem Fensterbereich und beispielsweise vollflächigem Aufdruck in den opaken Bereichen des Trägersubstrates ausgebildet. Es ist auch möglich, dass die transparente Schicht mit einem dunklen Haftmittel auf die opaken Bereichen des Trägersubstrates aufgebracht wird.

Als Trägersubstrat der transparenten Schicht, die in bzw. auf dem erfindungsgemäßen Sicherheitsdokument angeordnet ist, kann z.B. eine Papier-Banknote mit einem Fenster, eine Polymer-Banknote mit einem Fenster oder eine Polymer-Karte mit einem Fenster dienen. Ein in dem erfindungsgemäßen Mehrschichtkörperangeordnetes von der transparenten Schicht gebildetes optisches Element kann auf oder in einem Trägersubstrat auf eine der folgenden Arten angeordnet sein. Das optische Element kann in eine Laminierfolie eingebracht sein, die als Streifen oder Lage auf einer Papier-Banknote angeordnet ist, wobei zumindest ein Teil des optischen Elements im Bereich eines Fensters der Banknote angeordnet ist. Eine derartige Laminierfolie weist beispielsweise neben dem optischen Elementen eine Trägerfolie (z.B. PET-Folie einer Dicke von 12-60 µm) und eine Kleberschicht auf, mittels der die Laminierfolie auf der Banknote festgelegt ist (PET = Polyethylenterephthalat).

Das optische Element kann auch in der Übertragungslage einer Transferfolie, insbesondere einer Heißprägefolie eingebracht sein, die als Streifen oder Patch auf einer Papier-Banknote appliziert wird, wobei zumindest ein Teil des optischen Elements im Bereich eines Fensters der Banknote angeordnet ist. Das optische Element kann auch, z.B. mittels Heißprägens auf der Oberfläche einer Polymer-Banknote angebracht werden. Weiterhin kann das optische Element auch, z.B. mittels Heißprägens auf die Oberfläche einer der Kunststoffschichten appliziert werden, aus denen eine Polymer-Banknote zusammengesetzt ist, so dass das optische Element nach dem Zusammenfügen dieser Kunststoffschichten in das Trägersubstrat eingebettet ist. Das optische Element kann auch auf der Oberfläche einer Polymer-Karte, z.B. einer ID-Karte, angebracht werden (ID = Identification). Im Falle einer ID-Karte mit einem PCI (= Polycarbonate Inlay) kann das optische Element in bzw. auf einer Schicht angebracht sein, die als eine der unteren Schichten des fertigen Kartensubstrats vorliegt; mit anderen Worten, im Bereich von ID-Karten kann das optische Element in Polycarbonat eingebettet sein.

Weiter kann vorgesehen sein, dass die transparente Schicht als Teil eines Folienaufbaus ausgebildet ist. Der Folienaufbau weist ein oder mehrere Elemente aus der folgenden Gruppe auf: ein diffraktives OVD, vorzugsweise eine diffraktive Reliefstruktur, ein farbverschiebendes optisches Element, ein polarisierendes optisches Element, eine diffraktive oder refraktive Linse, eine Anordnung diffraktiver oder refraktiver Mikrolinsen, eine Farbfolie, eine Antenne zum Senden und/oder Empfangen elektromagnetischer Signale, eine Solarzelle, eine Anzeige/Display, eine elektronische Schaltung. Bei der elektronischen Schaltung handelt es sich vorzugsweise um eine elektronische Schaltung, die ein oder mehrere elektrische Funktionsschichten aufweist, die aus einer Lösung beispielsweise durch Druck, Rakeln, Gießen oder Sprühen aufgebracht sind. Bei diesen elektrischen Funktionsschichten handelt es sich vorzugsweise um elektrisch halbleitende Schichten, elektrische Isolationsschichten und/oder elektrisch leitende Schichten. Als Halbleiter für die elektrisch halbleitenden Schichten werden hierbei bevorzugt organische Halbleiter verwendet. Die elektronische Schaltung umfasst weiter bevorzugt ein oder mehrere organische Feldeffekttransistoren und bildet beispielsweise zusammen mit einer im Folienaufbau vorgesehenen Antenne einen RFID-Tag aus. Die Schichten der elektronischen Schaltung sind hierbei vorzugsweise mittels Drucken, Bedampfen, Heißprägen und Laminieren auf die übrigen Schichten des Folienaufbaus aufgebracht.

Es kann sein, dass die in dem Folienaufbau angeordneten Elemente die mindestens ersten und zweiten Teilbereiche nicht überdecken, d.h. dass die Elemente in der Schichtebene neben den mindestens ersten und zweiten Teilbereichen angeordnet sind. Es ist auch möglich, dass die in dem Folienaufbau angeordneten Elemente die mindestens ersten und zweiten Teilbereiche zumindest teilweise überdecken, z.B. dass ein Zusammenwirken einer Linse und eines Volumenhologramms ein zusätzliche optische Wirkung hervorruft.

In einer weiteren bevorzugten Ausgestaltung ist die transparente Schicht als Teil einer Laminierfolie und/oder Übertragungslage ausgebildet, die streifen- oder "patch"-förmig auf dem Trägersubstrat appliziert ist. Unter einem "Patch" wird ein flaches Folien- bzw. Lagenelement mit gleichmäßigem oder ungleichmäßigem Umriss verstanden, bei dem - im Gegensatz zu einem "Streifen" - die Ausdehnung in Querrichtung nicht erheblich von der Ausdehnung in Längsrichtung abweicht.

In einer weiteren bevorzugten Ausgestaltung ist die transparente Schicht als Photopolymerschicht ausgebildet. Photopolymere sind Harze, die durch Einwirkung von energiereichem Licht, insbesondere UV-Licht, vernetzen, also polymerisieren, und dadurch ihren Brechungsindex verändern (UV = Ultraviolett). Die transparente Schicht bildet dann eine photosensitive Schicht, was für die Herstellung der ersten und zweiten Teilbereiche mit den darin enthaltenen Bildinformationen von Bedeutung ist. Zur Erzeugung von Volumenhologrammen sind spezielle Photopolymere vorgesehen, deren Brechungsindex sich durch intensive Belichtung ändert, wie beispielsweise OmniDex^{®}, produziert von der Fa. DuPont.

Im folgenden wird die Erfindung anhand von mehreren Ausführungsbeispielen unter Zuhilfenahme der beiliegenden Zeichnungen beispielhaft verdeutlicht. Es zeigen:
- Fig. 1a, b: ein erstes Anwendungsbeispiel eines erfindungsgemäßes Sicherheitsdokuments;
- Fig. 2a, b: ein zweites Anwendungsbeispiel eines erfindungsgemäßes Sicherheitsdokuments;
- Fig. 3: eine Prinzipdarstellung eines Volumenhologramms;
- Fig. 4a-d: vier mögliche Anordnungen von Teilbereichen in schematischer Darstellung in der Draufsicht;
- Fig. 5a: einen Aufbau zur Herstellung einer ersten transparenten Schicht in schematischer Schnittdarstellung;
- Fig. 5b: die Funktion der ersten transparenten Schicht in schematischer Schnittdarstellung;
- Fig. 5c: ein Anordnungsbeispiel der verschachtelten Teilbereiche der ersten transparenten Schicht;
- Fig. 6a: einen Aufbau zur Herstellung einer zweiten transparenten Schicht in schematischer Schnittdarstellung;
- Fig. 6b: die Funktion der zweiten transparenten Schicht in schematischer Schnittdarstellung;
- Fig. 6c: ein Anordnungsbeispiel der verschachtelten Teilbereiche der zweiten transparenten Schicht;
- Fig. 7a: einen schematischen Schnitt durch ein drittes erfindungsgemäßes Sicherheitsdokument;
- Fig. 7b: eine Prinzipdarstellung der Funktion des in Fig. 7a dargestellten Sicherheitsdokuments bei Betrachtung der Vorderseite;
- Fig. 7c: eine Prinzipdarstellung der Funktion des in Fig. 7a dargestellten Sicherheitsdokuments bei Betrachtung der Rückseite;
- Fig. 8: ein drittes Anwendungsbeispiel eines erfindungsgemäßes Sicherheitsdokuments;
- Fig. 9a, b: Prinzipdarstellungen der Funktion eines erfindungsgemäßen Sicherheitsdokuments bei Auflicht und Durchlicht.

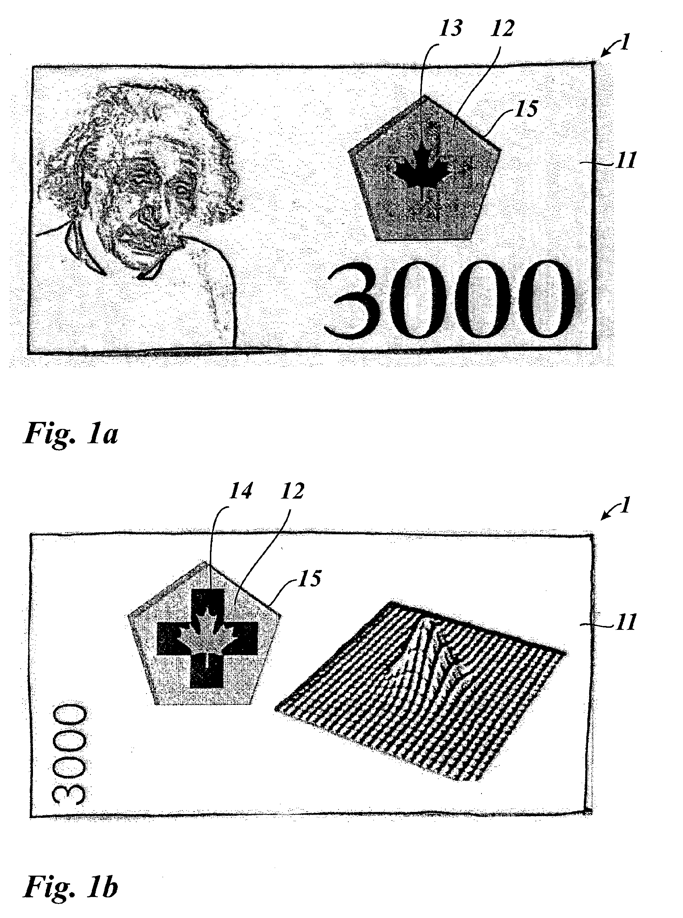

Die Fig. 1a und 1b zeigen ein Sicherheitsdokument 1 mit einer transparenten Schicht 12 in der Vorderansicht bzw. in der Rückansicht. Das Sicherheitsdokument 1 ist in dem in Fig. 1a und 1b dargestellten Beispiel ein Wertdokument, beispielsweise eine Banknote oder ein Scheck. Weiter ist es auch möglich, dass das Sicherheitsdokument 1 ein Identifikations-Dokument, beispielsweise einen Ausweis, bildet. Es ist auch möglich, daß es sich bei dem Sicherheitsdokument 1 z.B. um ein Etikett zur Produktsicherung oder um einen Aufkleber auf einer transparenten CD-Hülle zur Dokumentation der Originalität/Echtheit handelt.

Das Sicherheitsdokument 1 besteht aus einem flexiblen Trägersubstrat 11, auf dem die transparente Schicht 12 in einem Fenster 15 angeordnet ist. Bei dem Trägersubstrat 11 handelt es sich vorzugsweise um ein Trägersubstrat aus Papiermaterial, das mit einem Aufdruck versehen ist und in das weitere Sicherheitsmerkmale, beispielsweise Wasserzeichen oder Sicherheitsfäden, eingebracht sind. Es kann auch ein nichtflexibles Trägersubstrat 11 vorgesehen sein, wie das beispielsweise bei ID-Karten oder Kreditkarten der Fall sein kann.

Es ist jedoch auch möglich, dass es sich bei dem Trägersubstrat 11 um eine Kunststofffolie oder um ein aus ein oder mehreren Papier- und Kunststoffschichten bestehendes Laminat handelt.

Die Dicke des Trägersubstrats liegt dabei, falls es sich z.B. um eine Banknote handelt, in einem Bereich zwischen 0,06 mm und 0,15 mm. In das Trägersubstrat 11 ist das Fenster 15, beispielsweise durch Stanzen oder Schneiden, eingebracht, das anschließend durch Applizieren, z.B. vollflächiges Aufkleben, der transparenten Schicht 12 wieder verschlossen wird. Damit weist das Sicherheitsdokument 1 eine transparente Schicht 12 auf, die zumindest teilweise in dem Fenster 15 des Trägersubstrats 11 angeordnet ist.

Es ist jedoch auch möglich, dass als Material für das Trägersubstrat 11 bereits ein transparentes oder teiltransparentes Material verwendet wird und das Trägersubstrat somit im Bereich des Fensters 15 verbleiben kann. Dies ist beispielsweise der Fall, falls das Trägersubstrat 11 eine transparente Kunststofffolie aufweist, die im Bereich des Fensters 15 weder mit einer Trübungsschicht noch mit Druck versehen ist. Weiter ist es auch möglich, das Fenster 15 bereits bei der Papierherstellung zu erzeugen und die transparente Schicht 12 nach Art eines breiten Sicherheitsfadens in das Trägersubstrat 11 einzubringen.

Weiter ist es auch möglich, dass die transparente Schicht bzw. das Folienelement erst auf das Trägersubstrat appliziert wird und erst dann bedruckt wird. Bevorzugt wird die transparente Schicht bzw. das Folienelement hierbei von der Rückseite her bedruckt.

Es können hierbei sowohl "normale" Druckstoffe verwendet werden aber auch mit optisch variablen Pigmenten versehene Druckstoffe verwendet werden.

Beim Herstellungsprozess des Sicherheitsdokuments 1 ist es möglich, dass die transparente Schicht 12 auf einem blanken, unbedruckten Trägersubstrat aufgebracht wird, z.B. nach dem Ausschneiden des Fenster 15 während einer Herstellung des Trägersubstrates. Es ist auch möglich, dass die transparente Schicht 12 auf einem bereits fertig bedruckten Trägersubstrat aufgebracht wird, z.B. nach einem Offset-Druck, aber noch vor einem darauf folgenden Intaglio-Druck.

Wie in Fig. 1a und 1b dargestellt, ist bei Betrachtung der Vorderseite des Sicherheitsdokuments 1 auf der transparenten Schicht 12 ein Ahornblatt 13 zu erkennen. Bei Betrachtung der Rückseite des Sicherheitsdokuments 1 ist auf der transparenten Schicht 12 ein Kreuz 14 zu erkennen.

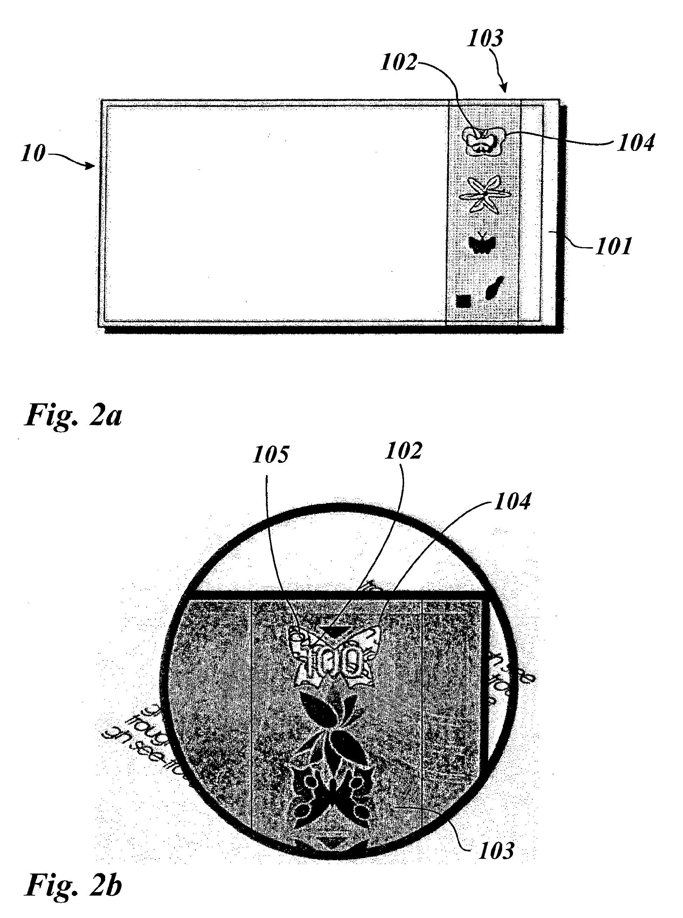

Die Fig. 2a und 2b zeigen nun ein zweites Anwendungsbeispiel für das vorstehend beschriebene Sicherheitsdokument.

Fig. 2a zeigt ein Sicherheitsdokument 10, das aus einem flexiblen Trägersubstrat 101 besteht, das nach dem ersten Fertigungsschritt eine fensterförmige Durchbrechung 104 aufweist. In dem dargestellten Beispiel handelt es sich bei dem Sicherheitsdokument 10 um eine Banknote. In einem zweiten Fertigungsschritt wurde auf das Sicherheitsdokument 10 ein Sicherheitsstreifen 103 aufgebracht, der die fensterförmige Durchbrechung 104 überdeckt. Der Sicherheitsstreifen 103 weist im oberen Abschnitt zwei Teilbereiche 102 mit variierender Brechzahl auf, die in der fensterförmigen Durchbrechung 104 angeordnet sind. Der Sicherheitsstreifen 103 besteht aus einem Mehrschichtkörper mit einer transparenten Schicht 30 und einer transparenten Trägerschicht z.B. aus Polyethylen (= PE), Polyethylenterephthalat (= PET), Polyethylennaphtalat (= PEN) oder Polycarbonat (= PC) und weist eine Dicke im Bereich von 5 bis 20 µm auf. Der Sicherheitsstreifen 103 kann teilweise im Offset-, Intaglio- oder Siebdruck-Verfahren bedruckt sein, oder auf einem Substrat angeordnet sein, das mit einem dieser Verfahren bedruckt wurde.

Fig. 2b zeigt eine Detailansicht der fensterförmigen Durchbrechung 104. Die fensterförmigen Durchbrechung 104 zeigt einen Umriss in Form eines Schmetterlings. Die fensterförmige Durchbrechung 104 ist mit dem Sicherheitsstreifen 103 abgedeckt, der von einer Laminierfolie gebildet wird, die eine transparente Schicht 30 enthält. Die transparente Schicht 30 weist im Bereich der fensterförmigen Durchbrechung 104 eine Wertangabe 102 (die Zahl "100") auf, die als in der transparenten Schicht 30 angeordnetes Volumenhologramm ausgebildet ist. Die verbleibenden Bereiche 105 der fensterförmigen Durchbrechung 104 sind als klare, durchsichtige Folienbereiche ausgebildet. In Fig. 2b ist die Durchsicht durch die verbleibenden Bereiche 105 mittels der Darstellung eines hinter dem Sicherheitsdokument 10 angeordneten Textes angedeutet.

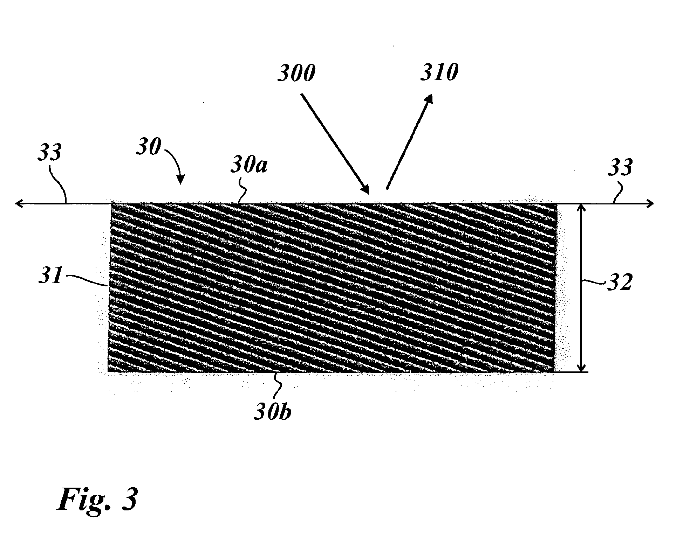

Fig. 3 zeigt einen schematischen senkrechten Schnitt durch die transparente Schicht 30, bei der es sich vorzugsweise um eine Photopolymerschicht mit näherungsweise planparallelen Oberflächen 30a, 30b und einer Schichtdicke 32 handelt. Die Schichtdicke 32 liegt typischerweise in einem Bereich von 5 µm bis 30 µm. Schrägverlaufend zu der durch die Schicht 30 aufgespannten, zu den beide Oberflächen 30a, 30b der Schicht 30 näherungsweise parallel verlaufenden Schichtebene 33 der Schicht 30 ist durch einen Hell-Dunkel-Verlauf eine periodische Modulation des Brechungsindexes angedeutet. Durch die Brechzahlvariation ist in der transparenten Schicht 30 eine Vielzahl periodisch angeordneter Knoten ausgebildet. Diese Knoten, die in ihrer Gesamtheit eine Beugung einfallenden Lichts hervorrufen und somit ein optisch wirkendes Element ausbilden, sind in im wesentlichen parallel zueinander verlaufenden Ebenen 31 angeordnet. Die Knoten weisen eine Brechzahl n' auf, die von einer Brechzahl n der Restbereiche der transparenten Schicht um den Wert δ abweicht: n' = n + δ. Die transparente Schicht 30 weist also eine ortsabhängige Brechzahl n' = n + δ auf, wodurch in der transparenten Schicht 30 ein dreidimensionales Brechzahlmuster gespeichert ist.

Dieses dreidimensionale Brechzahlmuster kann durch eine holografischen Interferenzanordnung erzeugt werden, z.B. einen Aufbau, bei dem ein kohärenter Lichtstrahl (einer Laserquelle) an einer diffraktiven Reliefstruktur einer Replizierschicht abgelenkt wird: Der zum Einschreiben eines Volumenhologramms auf die Photopolymerschicht 30 auftreffende Laserstrahl wird zunächst an der Photopolymerschicht 30 gebrochen und anschließend an einer Reflexionsschicht durch Beugung an der Gitterstruktur der Replizierschicht abgelenkt. Die abgelenkten Strahlen verkörpern eine Objektwelle, die mit einer durch den einfallenden Strahl verkörperten Referenzwelle interferiert und dabei in der Photopolymerschicht 30 lokale Polymerisation auslöst. Infolge der Polymerisation ist die Brechzahl der Photopolymerschicht 30 lokal geändert. Die Brechzahländerungen sind in den sogenannten Braggschen Ebenen 31 lokalisiert, die zuerst in Verbindung mit der Röntgenstrukturanalyse von Kristallen beschrieben wurden.

Verschiedene Ausgestaltungen einer derartige Anordnung werden im Folgenden beschrieben.

Zur Herstellung eines Volumenhologramms, wie es in dem erfindungsgemäßen Sicherheitsdokument ausgebildet sein kann, wird vorzugsweise die photosensitive Schicht unmittelbar oder unter Zwischenschaltung eines transparenten optischen Mediums in Kontakt mit der Vorderseite eines Masters gebracht, in den miteinander verschachtelte Bereiche mit mindestens zwei unterschiedlichen Oberflächenstrukturen abgeformt sind, welche die mindestens zwei unterschiedlichen Bildinformationen beinhalten. Die Oberflächenstrukturen sind z.B. in Form zweier asymmetrischer Reliefstrukturen ausgebildet, die durch eine besondere Ausgestaltung zur Erzeugung der oben beschriebenen optischen Elemente in der photosensitiven Schicht (= transparente Schicht) geeignet sind.

Die asymmetrischen Reliefstrukturen sind hierbei so ausgestaltet, dass sie das einfallende Licht in einer vorbestimmten Winkellage reflektieren bzw. beugen, die so bestimmt ist, dass der reflektierte/gebeugte Lichtstrahl eine Winkellage zu der von der transparenten Schicht aufgespannten Schichtebene einnimmt, die rechtwinklig zu der gewünschten Orientierung der Ebenen 31 steht. Die Winkellage, in denen die beiden asymmetrischen Reliefstrukturen den einfallenden Lichtstrahl reflektieren/beugen, sind so zum einen unterschiedlich und hängen weiter auch von der Winkellage ab, in der der kohärente Lichtstrahl auf die asymmetrischen Reliefstrukturen gestrahlt wird. Ausgehend von der gewünschten Orientierung der Ebenen 31 sowie des Aufbaus einer vorgegebenen holographischen Belichtungsanordnung kann so der zu wählende Ablenkungswinkel der asymmetrischen Reliefstrukturen durch einfache Rechnung bestimmt werden. Unter Ablenkungswinkel ist hier der Winkel zu verstehen, um den die asymmetrische Reliefstruktur einen senkrecht einfallenden Lichtstrahl durch refraktive Reflexion bzw. Beugung aus der Flächennormale ablenkt. Als asymmetrische Reliefstrukturen werden hierbei vorzugsweise die weiter unten erläuterten Blaze-Gitter verwendet. Weiter ist es auch möglich, in den entsprechenden Flächenbereich zwei unterschiedliche Kinoforme vorzusehen, die ein entsprechendes Ablenkungsverhalten zeigen.

Der Ablenkungswinkel dieser asymmetrischer Reliefstrukturen liegt vorzugsweise in einem Bereich zwischen 10° und 30°. Die photosensitive Schicht und der Master werden mit einem kohärenten Lichtstrahl belichtet und ein auf diese Weise in die photosensitive Schicht eingebrachtes sich durch Interferenz ergebendes Volumenhologramm wird durch Aushärten der photosensitiven Schicht fixiert.

Es kann vorgesehen sein, dass die photosensitive Schicht und der Master durch kohärente, z.B. von einem Laser generierte Lichtstrahlen unterschiedlicher Wellenlänge und/oder unterschiedlicher Richtung belichtet werden. Auf diese Weise kann erreicht werden, dass die im Volumenhologramm gespeicherten Bildinformationen in unterschiedlichen Farben erscheinen und/oder unter unterschiedlichen Blickwinkeln sichtbar sind. Es kann vorgesehen sein, dass die Oberflächenstrukturen des Masters teilweise keine Bildinformation beinhalten. Die Bereiche des Masters, die keine Bildinformation beinhalten, können z.B. als Hintergrundstruktur verwendet werden. Derartige Hintergrundstrukturen können z.B. so ausgebildet sein, dass Streulicht und/oder störende Reflexionen vermindert werden. Das kann dadurch erzielt werden, dass die Bereiche des Masters, die keine Bildinformation beinhalten, als Mottenaugen-Struktur und/oder als Spiegel und/oder als Mattstruktur und/oder als Streugitter ausgebildet sind. Es können auch Antireflexstrukturen oder weitergehend speziell dafür optimierte Strukturen dazu verwendet werden.

In einer weiteren vorteilhaften Ausbildung ist vorgesehen, dass die mindestens zwei Oberflächenstrukturen als zueinander gedrehte asymmetrische Oberflächenstrukturen ausgebildet sind. Beispielsweise weist eine erste asymmetrische Oberflächenstruktur eine näherungsweise senkrechte Flanke und daran anschließend eine nach rechts hin ansteigende Flanke auf. Eine zweite asymmetrische Oberflächenstruktur ist ähnlich aufgebaut, nur dass die ansteigende Flanke nach links hin ansteigt, also relativ zu der ersten asymmetrische Oberflächenstruktur um 180 Grad gedreht ist.

Die durch diese asymmetrischen Oberflächenstrukturen nach Belichtung in die photosensitive Schicht eingebrachten knotenförmigen Brechzahlinhomogenitäten weisen in verschiedenen, den unterschiedlichen Oberflächenstrukturen des Masters zugeordneten Teilbereichen entsprechende unterschiedliche Orientierungen auf. Zum Beispiel sind in einem ersten Teilbereich die Ebenen in einer ersten Richtung orientiert und in dem daran anschließenden zweiten Teilbereich die Ebenen in einer zweiten Richtung orientiert, die aus der ersten Richtung durch eine Drehung um 180 Grad entsteht.

Eine solche Orientierung der Oberflächenstrukturen ist besonders vorteilhaft, weil die unterschiedlichen Bildinformationen durch bloßes Kippen des Sicherheitsdokuments sichtbar werden. Die o.g. Oberflächenstrukturen können auch eine azimutale Variation aufweisen, so dass die dadurch in der photosensitiven Schicht erzeugten optisch wirkenden Strukturen sich verändernde Bilder hervorrufen, wenn die photosensitive Schicht von links nach rechts oder umgekehrt gekippt wird.

Vorteilhafterweise kann vorgesehen sein, dass es sich bei den asymmetrischen Oberflächenstrukturen um mit einer reflektierenden Oberfläche versehene Blazegitter mit sägezahnförmigen Oberflächen handelt, beispielweise mit einer Spatialfrequenz von 100 Linien/mm bis 150 Linien/mm.

Weiter kann vorgesehen sein, dass das Blazegitter eine Gittertiefe von 1 bis 2 µm aufweist. Blazegitter mit den vorstehend genannten Abmessungen können durch thermoplastische Verformung, beispielsweise mit Hilfe einer beheizten Prägewalze, oder photomechanisch durch Belichten eines UVhärtbaren Lacks erzeugt werden. Allgemein kann es sich bei den Gittern des Masters um eine mosaikähnliche Nebeneinanderstellung einer großen Vielzahl unterschiedlicher Gitter handeln, z.B. um Blazegitter mit einer Gitterperiode von ca. 1000 nm und einer Gittertiefe zwischen 100 und 500 nm mit verschiedenartigen azimutalen Orientierungen, Kinoformen, asymmetrische achromatische Gitter, Mattstrukturen, Oberflächenreliefstrukturen zur Ausbildung von Freiformlinsen, etc..

Weiter kann vorgesehen sein, dass es sich bei dem Raster um ein Streifenraster handelt. Ein Streifenraster ist besonders einfach realisierbar. Es können aber auch andere Raster vorgesehen sein, insbesondere wenn mehr als zwei unterschiedliche Bildinformationen ineinander verschachtelt werden sollen. Es kann sich beispielsweise um einen Pixel-Raster handeln, wobei der Master mittels Elektronenstrahltechnologie herstellbar ist. Durch die Rasterung ist gewährleistet, dass die Bildinformationen auch im Volumenhologramm voneinander getrennt sind, so dass Helligkeits- und/oder Schärfeverluste durch Überlagerung von Bildinformationen im Volumenhologramm nicht auftreten.

Zur Rekonstruktion des in die Photopolymerschicht 30 eingespeicherten Volumenhologramms wird die Photopolymerschicht 30 mit weißem Licht 300 bestrahlt, wie in Fig. 3 dargestellt. Dadurch ergibt sich in einer Richtung 310 die ungefähre Wiedergabe des Volumenhologramms bei einer Rekonstruktions-Wellenlänge, die zum Einschreiben des Volumenhologramms verwendet wurde. Die Rekonstruktions-Wellenlänge kann mithilfe verschiedener Verfahren gewählt werden, unter anderem durch: die Wahl der Laserwellenlänge, die Wahl des Gitterprofils und die Wahl von Farbstoffen in dem Photopolymer.

Weiter ist es auch möglich, dass auch der Einfallswinkel des Lasers in Bezug auf das Gitter des Masters einen Einfluss auf die durch das Präge-Gitter bestimmte Farbwiedergabe hat.

Zur Verschiebung der Wellenlänge des Hologramms ist es möglich, das Hologramm schrumpfen oder wachsen zu lassen bevor eine Barriereschicht aufgebracht wird. Diese Größenveränderung des Hologramms kann beispielsweise durch Einwirkung von Wärme oder Kälte auf das Hologramm vor dem Fixieren, oder durch chemische Mittel erreicht werden. Bedingt durch den Herstellungsprozess sind nur relativ geringe Abweichungen δ des Brechungsindexes möglich. Um trotzdem optische Elemente hoher Effizienz zu erreichen, ist in der transparenten Schicht 30 eine hohe Zahl von Ebenen 31 mit moduliertem Brechungsindex und folglich eine relativ große Schichtdicke 32 erforderlich. Für eine derartige Anordnung von brechzahlmodulierten Ebenen 31 wird im folgenden auch der Begriff "Bragg-Gitter" verwendet.

Wie bereits oben erwähnt, kann es sich bei der Photopolymerschicht um das Photopolymer OmniDex 706 der Fa. DuPont handeln, welches die genannte Eigenschaft der lokalen Brechzahländerung durch Belichtung aufweist. Es sind auch Photopolymere bekannt, die als flüssige Substanz vorliegen und beispielsweise durch Einwirkung von UV-Licht polymerisieren und dadurch aushärten. Es kann auch vorgesehen sein, das Photopolymer als Schicht aufzugießen und durch eine schwache UV-Lichteinwirkung vorzuhärten und/oder es nach der Ausbildung des Volumenhologramms durch UV-Lichteinwirkung oder durch Wärmebehandlung auszuhärten.

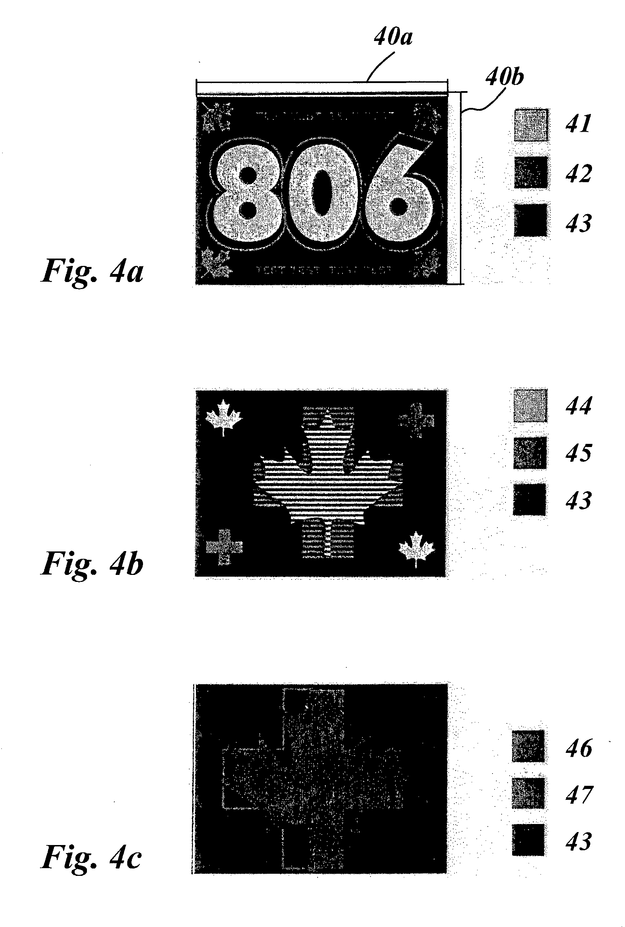

Fig. 4a bis 4d zeigt vier mögliche Anordnungen von oben beschriebenen Teilbereichen in fensterartigen Durchbrüchen eines Sicherheitsdokuments in schematischer Darstellung in der Draufsicht. Die dargestellten Anordnungen umfassen jeweils zwei verschiedene Bragg-Gitter.

Fig. 4a zeigt eine Anordnung mit einer horizontalen Ausdehnung 40a und einer vertikalen Ausdehnung 40b. Typischerweise weist die horizontale Ausdehnung 40a einen Wert von 20 mm und die vertikale Ausdehnung 40b einen Wert von 15 mm auf. Die Anordnung umfasst Bereiche mit einem ersten Bragg-Gitter 41, mit einem zweiten Bragg-Gitter 42, und Bereiche 43 ohne Bragg-Gitter. In der Standardsituation, d.h. der üblichen Betrachtungssituation in Auflicht von vorne, sieht der Betrachter eine helle rote Wertangabe, die Zahl "806", hervorgerufen von den Bereichen mit dem ersten Bragg-Gitter 41. Wird die Anordnung um 180° gedreht und von hinten betrachtet, nimmt der Betrachter den Umriss der Wertangabe in Grün, sowie mehrere kleine grüne Ahornblätter in den vier Ecken wahr, hervorgerufen von den Bereichen mit dem zweiten Bragg-Gitter 42. Betrachtet man die Anordnung von vorne und verkippt die Anordnung aus der Standardsituation weg, so erscheinen der helle grüne Umriss der Wertangabe und die Ahornblätter.

Fig. 4b zeigt eine zweite Anordnung, umfassend Bereiche mit einem ersten Bragg-Gitter 44, mit einem zweiten Bragg-Gitter 45, und Bereiche 43 ohne Bragg-Gitter. In der Standardsituation, d.h., der üblichen Betrachtungssituation in Auflicht von vorne, sieht der Betrachter ein helles grünes Ahornblatt sowie zwei kleine grüne Ahornblätter, je eines in der oberen linken Ecke und, diagonal dazu, in der unteren rechten Ecke. Wird die Anordnung um 180° gedreht und von hinten betrachtet, nimmt der Betrachter ein helles grünes Kreuz wahr sowie in der oberen rechten Ecke und in der unteren linken Ecke je ein kleines grünes Kreuz. Die zentralen optischen Elemente, das Ahornblatt und das Kreuz, sind als ineinander verschachtelte Streifenraster ausgebildet. Die nebeneinander angeordneten Streifen sind abwechselnd je einem der beiden optischen Motive zugeordnet. Die einzelnen Streifen weisen eine Breite von 100 µm auf. Die Wiederholungsperiode der Streifen, d.h. der Abstand von zwei dem selben Motiv (Ahorn oder Kreuz) zugeordneten Streifen, beträgt daher 200 µm.
Die idealen Wiederholungsperioden, d.h. die idealen Rastabstände, hängen hierbei von vielen Faktoren ab, insbesondere der Dicke des Photopolymers und die Komplexität der Darstellung. Besonders vorteilhaft ist es hierbei, die Rastabstände so klein wie möglich zu halten, d.h. so klein zu wählen, dass die maximale Diffraktionseffizienz noch erhalten bleibt.

Betrachtet man die Anordnung von vorne und verkippt die Anordnung aus der Standardsituation weg, so erscheinen das helle grüne Kreuz sowie die beiden kleinen grünen Kreuze, je eines in der oberen rechten Ecke und in der unteren linken Ecke.

Typischerweise weisen die Streifen von ineinander verschachtelten Rasterbildern eine Breite zwischen 25 und 150 µm auf. Entsprechend liegt die typische Wiederholungsperiode der Streifen, d.h. der Abstand von zwei demselben Motiv zugeordneten Streifen, zwischen 50 und 300 µm.

Fig. 4c zeigt eine dritte Anordnung, umfassend Bereiche mit einem ersten Bragg-Gitter 46, mit einem zweiten Bragg-Gitter 47, und Bereiche 43 ohne Bragg-Gitter. In der Standardsituation, d.h., der üblichen Betrachtungssituation in Auflicht von vorne, sieht der Betrachter ein helles rotes Ahornblatt, wobei die linke Blatthälfte als Fläche und die rechte Blatthälfte als Umriss erscheint. Wird die Anordnung um eine in der Blattebene entlang der Symmetrieachse des Ahornblatts liegende Achse um 180° gedreht und von hinten betrachtet, nimmt der Betrachter ein helles grünes Kreuz wahr, wobei die linke Kreuzeshälfte als Fläche und die rechte Kreuzeshälfte als Umriss erscheint. Betrachtet man die Anordnung von vorne und verkippt die Anordnung aus der Standardsituation weg, so erscheint das helles grünes Kreuz, wobei die rechte Kreuzeshälfte als Fläche und die linke Kreuzeshälfte als Umriss erscheint.

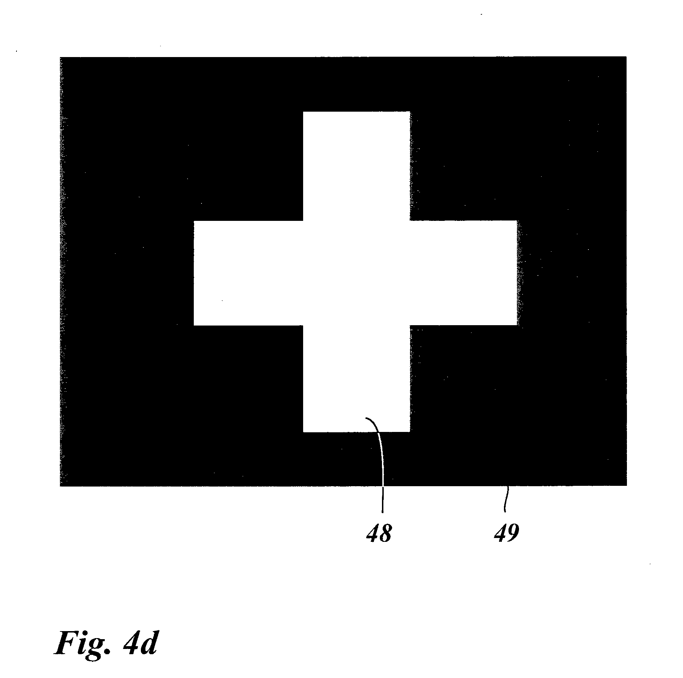

Fig. 4d zeigt eine vierte Anordnung, umfassend Bereiche mit einem ersten Bragg-Gitter 48, mit einem zweiten Bragg-Gitter 49. In der Standardsituation, d.h., der üblichen Betrachtungssituation von vorne, sieht der Betrachter ein helles grünes Kreuz. Wird die Anordnung um 180° gedreht und von hinten betrachtet, nimmt der Betrachter einen roten Hintergrund Kreuz wahr. Dieser Effekt kann analog zu dem diffraktiven Wasserzeichen des KINEGRAM^{®} ausgebildet sein.

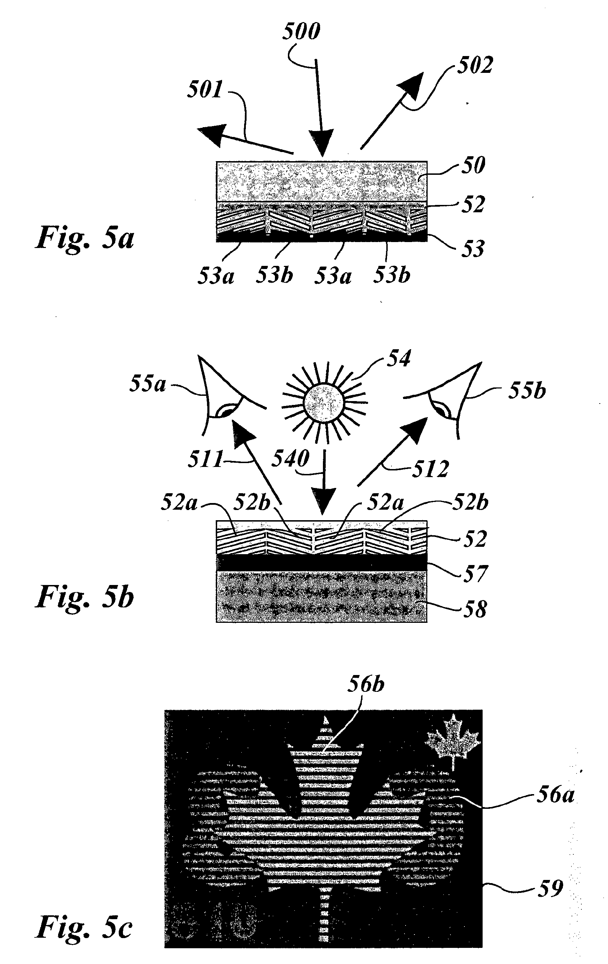

Fig. 5a-c stellen die Herstellung optischer Elemente sowie deren Funktion bei Anordnung vor einer opaken Fläche dar. Wird eine oben beschriebene transparente Schicht vor einem opaken Substrat angeordnet, ergibt sich bei einer Hin- und Herbewegung des Substrats typischerweise ein Wechsel zwischen zwei verschiedenen Bildern.

Fig. 5a stellt die Herstellung eines optischen Elements dar. Fig. 5a zeigt eine transparente Trägerfolie 50, die an ihrer Unterseite eine transparente Photopolymerschicht 52 trägt. Die transparente Trägerfolie 50 besteht z.B. aus PET und weist eine Dicke von 12 bis 60 µm auf. Die transparente Photopolymerschicht 52 besteht z.B. aus OmniDex^{®} 706 und weist eine Dicke von 15 bis 30 µm auf. Die Photopolymerschicht 52 wird vorzugsweise durch Drucken oder Rakeln auf der Trägerfolie 50 aufgebracht.

Unterhalb der Photopolymerschicht 52 ist ein Beugungsgitter 53 in Form eines Oberflächenreliefs angeordnet. Das Beugungsgitter 53 weist Bereiche mit unterschiedlicher Reliefstruktur auf, nämlich Bereiche 53a mit einer ersten Reliefstruktur, die das einfallende Licht gemäß einem ersten Ablenkungswinkel ablenkt, und Bereiche 53b mit einer zweiten Reliefstruktur, die das einfallende Licht gemäß einem hier von unterschiedlichen zweiten Ablenkungswinkeln ablenkt. Unter Ablenkungswinkel wird hierbei - wie bereits oben definiert - der Winkel verstanden, um den ein senkrecht zur Schichtebene der Photopolymerschicht 52 einfallender Lichtstrahl von der entsprechenden Reliefstruktur durch Beugung und/oder Reflexion abgelenkt wird. Dieser Ablenkungswinkel wird hierbei in Abhängigkeit vom holographischen Belichtungsaufbau so gewählt, dass sich beim Belichten in den Bereich 53a und 53b die Ebenen 31 mit den in Fig. 5a angedeuteten unterschiedlichen Winkellagen zueinander und zu der von der Photopolymerschicht 52 aufgespannten Schichtebenen ausbilden (siehe auch obige Erläuterungen). Die Bereiche 53a und 53b sind hierbei zum einen abwechselnd in Form eines Streifenrasters vorgesehen. Im weiteren sind die Bereiche 53a und 53b nicht vollflächig in dem gemäß dem Streifenraster zustehenden Bereichen vorgesehen, sondern nur bereichsweise gemäß einer jeweilig vorgegebenen Bildinformation vorgesehen. Die Bereiche 53a bilden so in ihrer Ausdehnung eine Bildinformation in Form einer Zahl "810" wie dies ebenfalls in Fig. 5c dargestellt ist. Die Bereiche 53b bilden so in ihrer Ausdehnung eine Bildinformation in Form eines Blattes, wie dies ebenfalls in Fig. 5c dargestellt ist.

Die Strukturen der Reliefstruktur weisen in der Ebene des Beugungsgitter 53, d.h. in horizontaler Richtung typischerweise Abmessungen im Bereich von 0,5 bis 10 µm (= Gitterweite), und in vertikaler Richtung typischerweise Abmessungen im Bereich von 50 nm bis 10 µm (= Gittertiefe, Strukturtiefe) auf.

Um in der Photopolymerschicht 52 unterschiedlich orientierte optisch wirksame Ebenen zu erzielen, kann vorgesehen sein, dass sich die Abmessungen der Reliefstruktur gleichmäßig ändern und/oder dass die Profiltiefe und/oder Spatialfrequenz kontinuierlich, z.B. linear, zunehmen.

Ein ungefähr senkrecht auf die Trägerfolie 50 einfallender kohärenter Lichtstrahl 500, z.B. mit einer Wellenlänge von 632,8 nm, tritt durch die Trägerfolie 50 und die Photopolymerschicht 52 hindurch und erfährt an dem Beugungsgitter 53 eine beugungsbedingte Ablenkung. Ein in den Bereichen 53a mit der ersten Reliefstruktur abgelenkter Teil 501 des Lichtstrahls interferiert in der Photopolymerschicht 52 mit dem einfallenden Lichtstrahl 500. Ein in den Bereichen 53b mit der ersten Reliefstruktur abgelenkter Teil 502 des Lichtstrahls interferiert ebenfalls in der Photopolymerschicht 52 mit dem einfallenden Lichtstrahl 500. Die auf diese Weise in die Photopolymerschicht 52 eingebrachten Braggsche Ebenen von zwei verschiedenen Volumenhologrammen, deren Braggsche Ebenen wie in Fig. 5a angedeutet in unterschiedlichen Winkellage zueinander ausgerichtet sind, werden durch Aushärten der Photopolymerschicht 52 fixiert, z.B. durch Einwirken von UV-Strahlung. In dem dargestellten Beispiel weist die Photopolymerschicht 52 zwei unterschiedliche, ineinander verschachtelte optische Elemente auf, von denen das eine durch die in den Bereichen 53a vorgesehenen Reliefstrukturen und das andere von den in den Bereichen 53b vorgesehenen Reliefstrukturen bei dem oben beschriebenen Abbildungsprozess generiert wird. Jedes optische Element besteht aus den Braggschen Ebenen eines Volumenhologramms, welche im wesentlichen parallel zueinander in der in Fig. 5a angedeuteten Winkellage vorgesehen sind.

Fig. 5b stellt eine Funktion der in Fig. 5a beschriebenen optischen Elemente dar welche nicht zur Erfindung gehört. Fig. 5b zeigt die transparente Photopolymerschicht 52, die mittels einer Haftmittelschicht 57 auf einem Trägersubstrat 58, z.B. einem Geldschein angebracht ist. Es ist üblich, dass nach dem Aushärten der Photopolymerschicht 52 eine Barriereschicht auf der unteren Oberfläche der Photopolymerschicht 52 aufgebracht wird, wobei "untere Oberfläche" die zur Haftmittelschicht 57 gerichtete Oberfläche der Photopolymerschicht 52 meint. Diese Barriereschicht verhindert die Diffusion von chemischen Substanzen, die zu einer Schrumpfung oder einem Anschwellen des Bragg-Gitters der Photopolymerschicht 52 führen könnten. Die Barriereschicht ist typischerweise auf Basis eines UV-Lacks gebildet. Nach dem Auftragen der Barriereschicht können Druckschichten, Haftmittelschichten zum Verkleben mit dem Trägersubstrat , Metallschichten, etc. auf die Photopolymerschicht 52 aufgebracht werden.

Die Photopolymerschicht 52 weist die beiden ineinander verschachtelten optischen Elemente auf, von denen das erste, in ersten Bereichen 52a angeordnete optische Element in seiner Flächenausdehnung die Zahl "810" als Bildinformation enthält und das zweite, in zweiten Bereichen 52b angeordnete optische Element in seiner Flächenausdehnung ein Blatt als Bildinformation enthält. Ein von einer Lichtquelle 54 (Glühbirne, Leuchtstoffröhre, Sonne, etc.) kommender Lichtstrahl 540 fällt auf die Photopolymerschicht 52, wird durch die Beugungsstrukturen der Photopolymerschicht 52 abgelenkt und führt zur Rekonstruktion der eingespeicherten Bildinformationen. Ein erster abgelenkter Teil 511 des Lichtstrahls 540 gelangt in einer ersten Betrachtungsposition 55a in das Auge eines Beobachter, der ein volumenholografisches Abbild der Zahl "810" wahrnimmt. Ein zweiter abgelenkter Teil 512 des Lichtstrahls 540 gelangt in einer zweiten Betrachtungsposition 55b in das Auge des Beobachters, der ein volumenholografisches Abbild des Blatts wahrnimmt. Gewöhnlich wird es von Vorteil sein, als Haftmittelschicht 57 einen transparenten Klebstoff, v.a. im Bereich des Fensters zu verwenden. Es kann allerdings auch ein eingefärbter Klebstoff als Haftmittelschicht 57 aufgebracht werden.

Fig. 5c zeigt eine Ansicht der Anordnung der transparenten Photopolymerschicht mit der volumenholografischen Bildinformation vor einem opaken Hintergrund 59 welche nicht zur Erfindung gehört. Die Photopolymerschicht weist ein Streifenraster auf, das sich aus den zwei ineinander verschachtelten Bildinformationen zusammensetzt. Die Rasterlinien weisen einen Abstand von ca. 50 µm zueinander auf und sind zwischen 5 mm und 20 mm lang. Je nach Betrachtungssituation, d.h. abhängig von Lichteinfall und Sichtwinkel relativ zur Schichtebene der Photopolymerschicht, ist die eine oder andere Bildinformation sichtbar. Die Wellenlänge des von dem jeweiligen optischen Element, d.h., den Braggschen Ebenen, ausgehenden Lichts hängt von dem Aufbau der optischen Elemente ab, d.h. ist abhängig von den Abmessungen, insbesondere der Beabstandung der Ebenen. Bei Einfall von weißem Licht, z.B. Sonnenlicht, nimmt ein Betrachter beide Volumenhologramme, sowohl die Zahl als auch das Blatt, in einer bestimmten Farbe wahr, z.B. grün. Der Wechsel zwischen den beiden Bildinformationen ergibt sich in der Standardsituation, d.h. bei Auflicht bei Betrachtung von Vorne, beim Hin- und Herkippen der Photopolymerschicht unabhängig davon ob die Volumenhologramme im Bereich eines transparenten Fensters oder über einem opaken Substrat angeordnet sind.

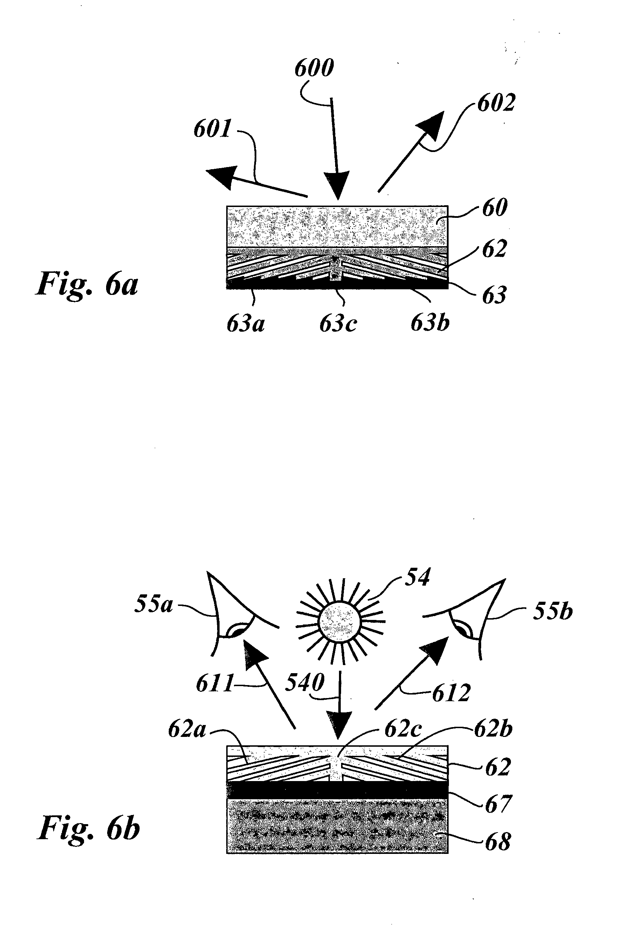

Fig. 6a-c sind nicht Teil der Erfindung und stellen die Herstellung optischer Elemente sowie deren Funktion bei Anordnung vor einer opaken Fläche dar. Der grundsätzliche Unterschied zu den in den Fig. 5a-c beschriebenen Elementen besteht darin, dass es sich bei den in den Fig. 6a-c beschriebenen Elementen um keine ineinander verschachtelten Streifenraster, sondern um flächige Bildinformationen handelt.

Fig. 6a stellt die Herstellung eines optischen Elements dar. Fig. 6a zeigt eine transparente Trägerfolie 60, die an ihrer Unterseite eine transparente Photopolymerschicht 62 trägt. Unterhalb der Photopolymerschicht 62 ist ein Beugungsgitter 63 in Form eines Oberflächenreliefs angeordnet. Das Beugungsgitter 63 weist Bereiche mit unterschiedlicher Reliefstruktur auf, nämlich Bereiche 63a mit einer ersten, eine Blatt als Bildinformation enthaltenden Reliefstruktur und Bereiche 63b mit einer zweiten, ein Kreuz als Bildinformation enthaltenden Reliefstruktur. Daneben existieren noch Bereiche 63c, in denen das Beugungsgitter 63 keine Gitterstrukturen aufweist, z.B. als Spiegel ausgebildet ist. Gemäß einer weiteren bevorzugten Ausführungsform sind in den Bereichen 63 Mottenaugenstrukturen vorgesehen, welche eine Reflexion des Laserlichts in diesen Bereichen verhindern und so das Ausbilden von Bragg-Gitterebenen unterbinden. Die Anordnung wird mit Lichtstrahlen 600 aus kohärenten Lichtquellen beleuchtet.

Ein roter Laserstrahl beleuchtet den Gitterbereich 63a. Der rote Laserstrahl trifft unter einem Winkel von 10 Grad auf die Trägerfolie 60 auf, tritt durch die Trägerfolie 60 und die Photopolymerschicht 62 hindurch und erfährt in dem Bereich 63a des Beugungsgitters 63 eine beugungsbedingte Ablenkung. Ein abgelenkter Teil 601 des roten Laserstrahls interferiert in der Photopolymerschicht 62 mit dem einfallenden roten Laserstrahl. Ein grüner Laserstrahl beleuchtet den Gitterbereich 63b. Der grüne Laserstrahl trifft unter einem Winkel von -15 Grad auf die Trägerfolie 60 auf, tritt durch die Trägerfolie 60 und die Photopolymerschicht 62 hindurch und erfährt in dem Bereich 63b des Beugungsgitters 63 eine beugungsbedingte Ablenkung. Ein abgelenkter Teil 602 des grünen Laserstrahls interferiert in der Photopolymerschicht 62 mit dem einfallenden grünen Laserstrahl.

Auf diese Weise in die Photopolymerschicht 62 eingebrachte Braggsche Ebenen von zwei verschiedenen Volumenhologrammen werden durch Aushärten der Photopolymerschicht 62 fixiert. In dem dargestellten Beispiel weist die Photopolymerschicht 62 zwei unterschiedliche, flächige optische Elemente auf. Jedes optische Element besteht aus den Braggschen Ebenen eines Volumenhologramms. In dem Bereich 63c bilden sich bei keiner der Laserbeleuchtungen Braggsche Ebenen aus. Fig. 6b stellt die Funktion der in Fig. 6a beschriebenen optischen Elemente dar. Fig. 6b zeigt die transparente Photopolymerschicht 62, die mittels einer Haftmittelschicht 67 auf einem Trägersubstrat 68, z.B. einem Geldschein angebracht ist. Die Einfallswinkel der Laserstrahlen 600, das Beugungsgitter 63 mit seinen beiden unterschiedlichen Bereichen 63a und 63b, die Laser sowie die Photopolymerschicht 62 sind so gewählt, dass bei einer ersten Betrachtungssituation (z.B. abhängig vom Kippwinkel des Trägersubstrats 68) in einem ersten Bereich 62a der Photopolymerschicht 62 eine rote "5" erscheint und bei einer zweiten Betrachtungssituation (z.B. abhängig vom Kippwinkel des Trägersubstrats 68) in einem zweiten Bereich 62b der Photopolymerschicht 62 eine grüne "0" erscheint. Ein von einer Lichtquelle 54 (Glühbirne, Sonne, etc.) kommender Lichtstrahl 540 fällt auf die Photopolymerschicht 62, wird durch die Beugungsstrukturen der Photopolymerschicht 62 abgelenkt und führt zur Rekonstruktion der eingespeicherten Bildinformationen. Ein erster abgelenkter Teil 611 des Lichtstrahls 540 gelangt in einer ersten Betrachtungsposition 55a in das Auge eines Beobachter, der ein volumenholografisches Abbild der "5" wahrnimmt. Ein zweiter abgelenkter Teil 612 des Lichtstrahls 540 gelangt in einer zweiten Betrachtungsposition 55b in das Auge des Beobachters, der ein volumenholografisches Abbild der "0" wahrnimmt.

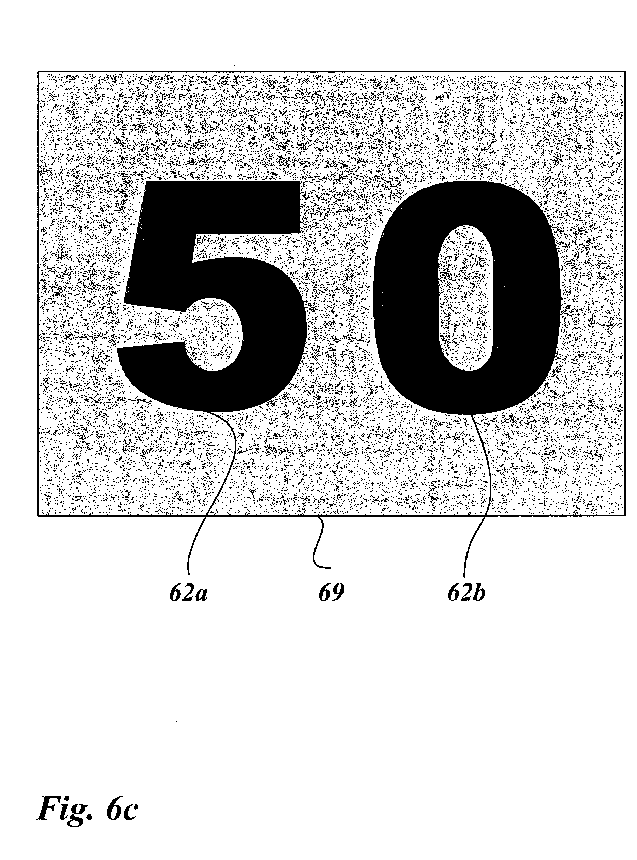

Fig. 6c zeigt eine Ansicht der Anordnung der transparenten Photopolymerschicht mit der volumenholografischen Bildinformation vor einem opaken Hintergrund 69. Die Photopolymerschicht weist nebeneinander angeordnete, flächige optische Elemente auf, von denen jedes eine Bildinformation aufweist. Je nach Betrachtungssituation, d.h. abhängig von Lichteinfall und Sichtwinkel relativ zur Schichtebene der Photopolymerschicht, ist die eine oder andere Bildinformation sichtbar. Beispielweise erkennt ein Betrachter bei unterschiedlich starkem Verkippen des Trägersubstrats eine "5" oder eine "0". Die Wellenlänge des von dem jeweiligen optischen Element, d.h., den Braggschen Ebenen, ausgehenden Lichts hängt von dem Aufbau der optischen Elemente ab, d.h. ist abhängig von den Abmessungen der Ebenen, etc. Der Hintergrund 69 bleibt stets dunkel, weil in diesem Bereich keine Bragg-Gitter ausgebildet wurden.

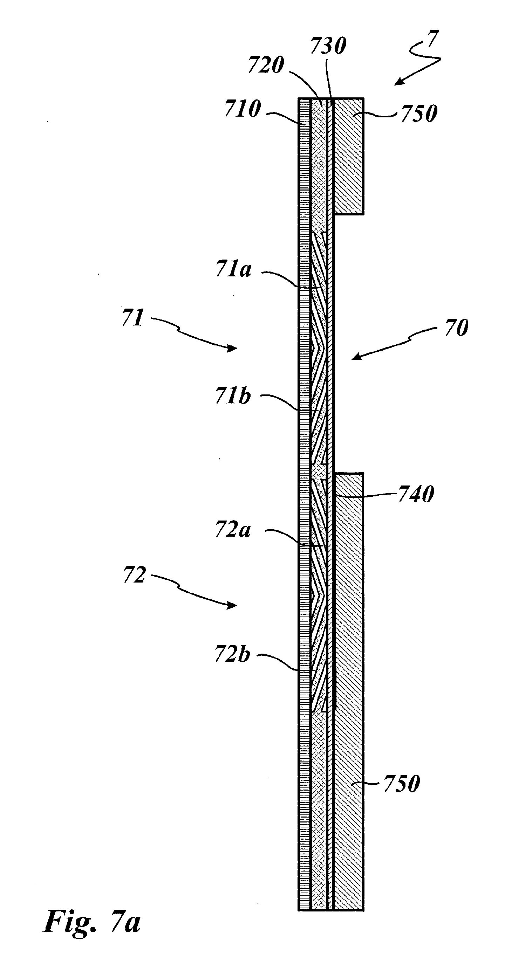

Fig. 7a zeigt einen Schnitt durch ein erfindungsgemäßes Sicherheitsdokument 7. Das Sicherheitsdokument 7 ist mehrlagig aufgebaut und weist, von der Vorderseite des Sicherheitsdokuments 7 aus gesehen, hintereinander ein Laminat 710, eine Photopolymerschicht 720, eine Haftmittelschicht 730 und ein Banknotenpapier 750 auf. In einem Teilbereich des Sicherheitsdokuments 7 ist in dem Banknotenpapier 750 ein Fenster 70 ausgespart, in einem anderen Teilbereich ist zwischen der Haftmittelschicht 730 und dem Banknotenpapier 750 eine dunkle Druckschicht 740 angeordnet. Durch die Unterlegung mit einer dunklen, z.B. schwarzen, Druckfarbe ist ein individualisierter optischer Effekt erreichbar. Zum Beispiel kann eine Banknote vor der Applikation der Photopolymerschicht 720 mit einer schwarzen Seriennummer auf hellem Untergrund bedruckt werden.

In der Photopolymerschicht 720 sind in der Schichtebene nebeneinander zwei identische optische Elemente 71, 72 angeordnet, wobei das eine Element 71 im Bereich des Fensters 70, das andere Element 72 im Bereich der Druckschicht 740 angeordnet ist. Jedes der optischen Elemente 71, 72 ist durch Bragg-Gitter eines in die Photopolymerschicht 720 eingebrachten Volumenhologramms gebildet. Jedes der optischen Elemente 71, 72 weist zwei Teilbereiche 71 a, 71 b, 72a, 72b auf. Die Teilbereiche 71 a und 72a weisen ein Bragg-Gitter mit einer ersten Ausrichtung der Bragg-Ebenen und die Teilbereiche 71 b und 72b weisen ein Bragg-Gitter mit einer zweiten Ausrichtung der Bragg-Ebenen auf.

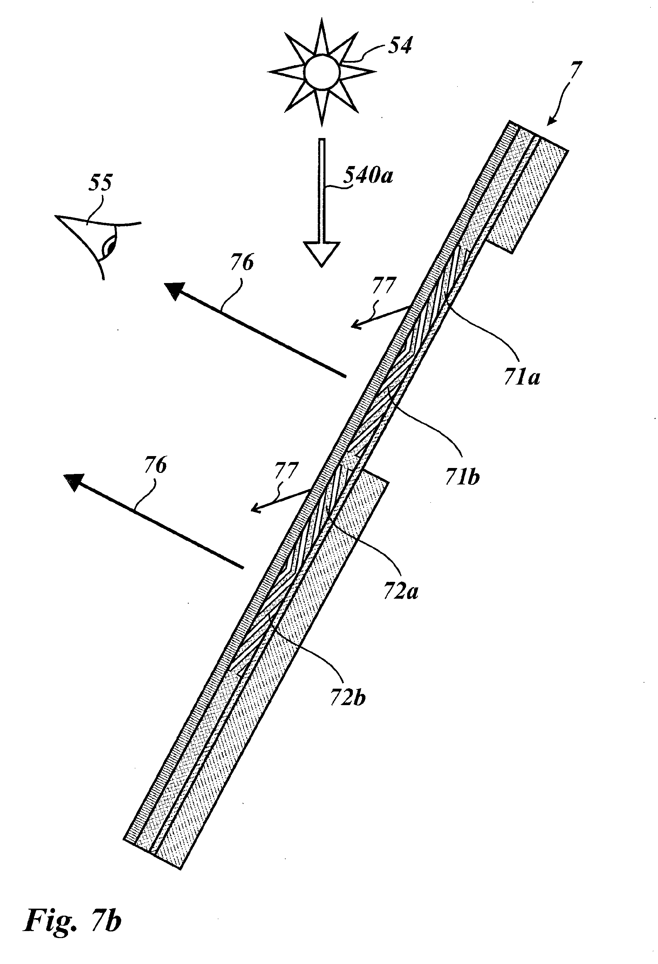

Fig. 7b zeigt das in Fig. 7a dargestellte Sicherheitsdokument 7 bei Lichteinfall in Auflicht 540a auf die Vorderseite des Sicherheitsdokuments 7. Der Lichtstrahl in Auflicht 540a wird durch die Bragg-Gitter der Teilbereiche 71 b und 72b in eine Richtung 76 abgelenkt. Ein Betrachter 55 in dieser Richtung 76 nimmt die durch die Bragg-Gitter dieser Teilbereiche 71b und 72b gebildeten Volumenhologramme wahr, zum Beispiel ein volumenholografisches Abbild eines Blatts. Der Lichtstrahl in Auflicht 540a wird durch die Bragg-Gitter der Teilbereiche 71a und 72a in eine Richtung 77 abgelenkt. Der Betrachter 55 nimmt die durch die Bragg-Gitter dieser Teilbereiche 71 a und 72a gebildeten Volumenhologramme folglich nicht wahr.

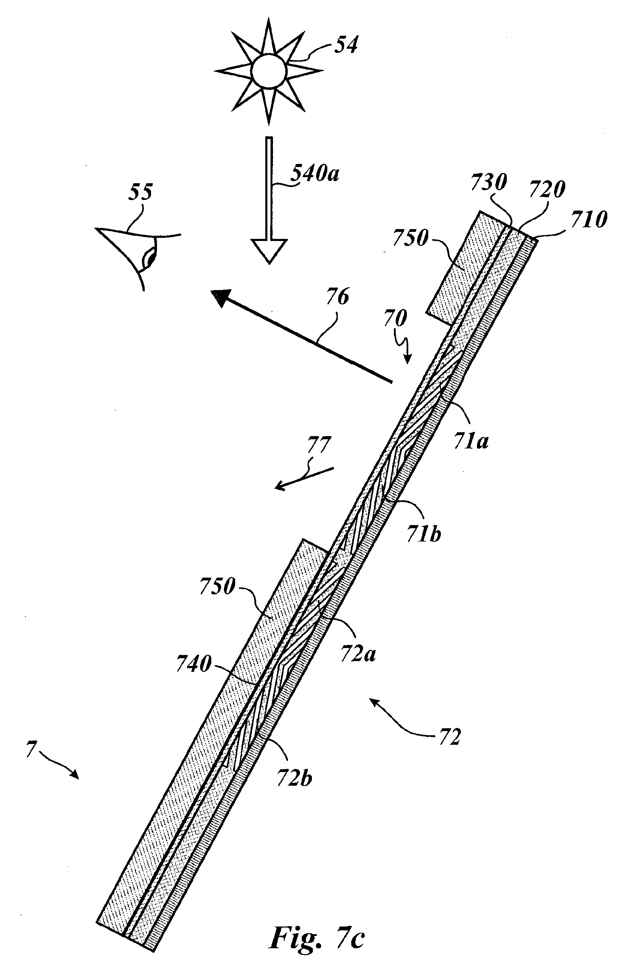

Fig. 7c zeigt das in Fig. 7a dargestellte Sicherheitsdokument 7 nach einer Drehung um 180 Grad, d.h. bei Lichteinfall in Auflicht 540a auf die Rückseite des Sicherheitsdokuments 7. Der Lichtstrahl in Auflicht 540a wird durch die Bragg-Gitter des Teilbereichs 71a in die Richtung 76 abgelenkt. Ein Betrachter 55 in dieser Richtung 76 nimmt das durch die Bragg-Gitter dieses Teilbereichs 71 a gebildete Volumenhologramm wahr, zum Beispiel ein volumenholografisches Abbild eines Kreuzes. Der Lichtstrahl in Auflicht 540a wird durch die Bragg-Gitter des Teilbereichs 71 b in die Richtung 77 abgelenkt. Der Betrachter 55 nimmt das durch die Bragg-Gitter dieses Teilbereichs 71 b gebildete Volumenhologramm folglich nicht wahr. Das zweite optische Element 72 wird durch das Trägersubstrat abgedeckt und ist bei Beleuchtung von der Rückseite des Sicherheitsdokuments 7 ohne optische Wirkung.

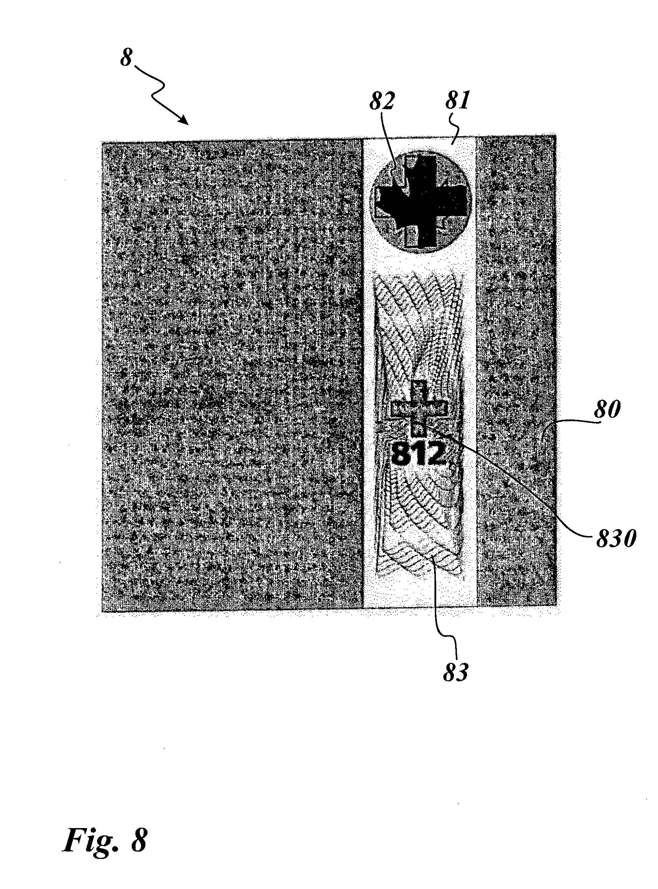

Fig. 8 zeigt ein Sicherheitsdokument 8, das ein Trägersubstrat 80 und ein Sicherheitselement 81 aufweist. Das Sicherheitselement 81 weist eine transparente Schicht auf, die teilweise im Bereich einer Durchbrechung 82 des Trägersubstrats 80 angeordnet ist, sowie ein zusätzliches OVD 83. Bei dem OVD 83 kann es sich um ein diffraktives OVD, z.B. ein KINEGRAM^{®}, ein farbverschiebendes Merkmal, z.B. ein OVI (= Optically Variable Ink) oder ein Flüssigkristall, ein polarisierendes Element, diffraktives oder refraktive Linsen oder Mikrolinsen-Arrays, eine Antenne, eine Solarzelle, eine Anzeigeneinrichtung, oder um ein anderes elektronisches Element handeln. Es kann auch vorgesehen sein, dass auf die transparente Schicht in dem Bereich des Fensters eine Metallschicht aufgebracht wurde, z.B. aus Aluminium, Kupfer, Silber oder Gold. Eine derartige Metallschicht hat typischerweise eine Dicke im Bereich von 200 nm bis 600 nm und kann dazu dienen, Reflexionen zu erzeugen. Die Dicke der Metallschicht kann so gewählt sein, dass sie im Auflicht reflektiert und im Durchlicht transparent erscheint.

Dieses zusätzliches OVD 83 kann als Referenz für die Effekte der transparenten Schicht dienen. Beispielsweise kann es sich bei dem in Fig. 8 dargestellten OVD 83 um ein KINEGRAM^{®} handeln. Ein durch die transparente Schicht erzeugtes erstes Volumenhologramm kann so ausgebildet sein, dass es genau dann hell erscheint, wenn das in dem OVD 83 enthaltene Kreuz 830 hell erscheint. Und ein durch die transparente Schicht erzeugtes zweites Volumenhologramm kann so ausgebildet sein, dass es genau dann hell erscheint, wenn ein in dem OVD 83 enthaltenes zweites Bild hell erscheint.

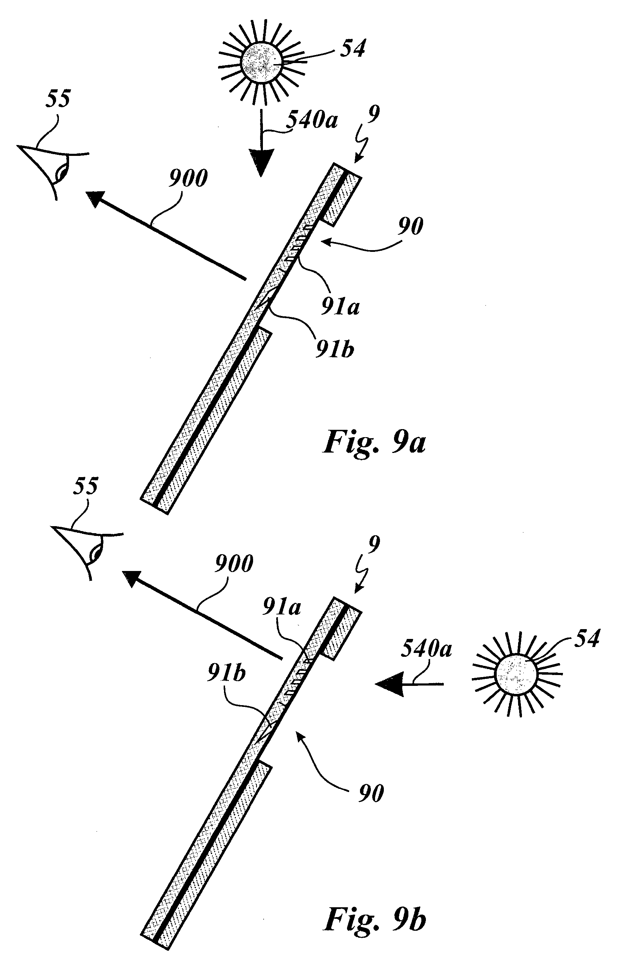

Fig. 9a und 9b zeigen einen Schnitt durch ein erfindungsgemäßes Sicherheitsdokument 9 in Auflicht und Durchlicht. Das Sicherheitsdokument 9 weist eine transparente Schicht auf, wobei in einem ersten Teilbereich 91 a der Schicht ein Bragg-Gitter eines Transmissions-Volumenhologramms, z.B. mit dem Abbild eines Quadrats, und in einem zweiten Teilbereich 91 b der Schicht ein Bragg-Gitter eines Reflexions-Volumenhologramms, z.B. mit dem Abbild eines Sterns, angeordnet ist. Beide Teilbereiche 91 a und 91 b sind zumindest teilweise im Bereich eines Fensters 90 des Sicherheitsdokuments 9 angeordnet, so dass die Bragg-Gitter sowohl in Auflicht als auch in Durchlicht von einer Lichtquelle 54 beleuchtet werden können. Die Bragg-Gitter des Reflexions-Volumenhologramms sind so orientiert, dass die Braggschen Ebenen einen Winkel von -30 bis +30 Grad zur Schichtebene einnehmen. Das Bragg-Gitter des Transmissions-Volumenhologramms ist so orientiert, dass die Braggschen Ebenen annähernd rechtwinklig zu der Schichtebene der transparenten Schicht orientiert sind, vorzugsweise einen Winkel von -30 bis +30 Grad zur Schichtebenen-Normalen einnehmen.

Fig. 9a zeigt das Sicherheitsdokument 9 in einer Auflicht-Anordnung. Ein von der Lichtquelle 54 kommender Lichtstrahl in Auflicht 540a fällt in einem spitzen Winkel auf die Vorderseite des Sicherheitsdokuments 9. Das in dem Teilbereich 91 b angeordnete Bragg-Gitter des Reflexions-Hologramms lenkt einen Teil des auffallenden Lichts in eine Richtung 900 zu einem Betrachter 55, der das Bild des Reflexions-Volumenhologramms, d.h. den Stern, wahrnimmt.

Fig. 9b zeigt das Sicherheitsdokument 9 in einer Durchlicht-Anordnung. Ein von der Lichtquelle 54 kommender Lichtstrahl in Durchlicht 540d fällt in einem spitzen Winkel auf die Rückseite des Sicherheitsdokuments 9. Das in dem Teilbereich 91 a angeordnete Bragg-Gitter des Transmissions-Hologramms lenkt einen Teil des auffallenden Lichts in die Richtung 900 zu dem Betrachter 55, der das Bild des Transmissions-Volumenhologramms, d.h. das Quadrat, wahrnimmt.

## Patentansprüche

1. Mehrschichtkörper (1, 7), insbesondere Sicherheitsdokument mit einem Trägersubstrat (11, 58, 750) und mit einer transparenten Schicht (12, 52, 720), die zumindest teilweise in einem Fenster (15, 70) oder in einem transparenten Bereich des Trägersubstrats (11, 58, 750) angeordnet ist,
**dadurch gekennzeichnet,**
**dass** die transparente Schicht (12, 52, 720) mindestens einen ersten (52a, 71 a) und einen zweiten Teilbereich (52b, 71 b) mit variierender Brechzahl aufweist, die in der von der transparenten Schicht (12, 52, 720) aufgespannten Schichtebene (33) nebeneinander angeordnet sind, wobei der mindestens erste (52a, 71a) und der mindestens zweite Teilbereich (52b, 71 b) zumindest teilweise in dem Fenster (15, 70) oder in dem transparenten Bereich des Trägersubstrats (11, 58, 750) angeordnet sind;
**dass** jeder der Teilbereiche (52a, 52b, 71 a, 71 b) eine Vielzahl periodisch angeordneter, ein optisch wirkendes Element ausbildender, durch Brechzahlvariation gebildeter Knoten, die in im wesentlichen parallel zueinander verlaufenden Ebenen (31) angeordnet sind, aufweist; und dass die Ebenen (31) in dem mindestens ersten Teilbereich (52a, 71 a) nicht parallel zu den Ebenen (31) in dem mindestens zweiten Teilbereich (52b, 71 b) sind und dass mindestens in einem der Teilbereiche (52a, 52b, 71a, 71b) die Ebenen (31) weder parallel noch senkrecht zu der Schichtebene (33) verlaufen, so dass sowohl das auf die Vorderseite als auch das auf die Rückseite des Mehrschichtkörpers (1, 7) fallende Licht (540) durch die optisch wirkenden Elemente gebeugt wird und die Elemente im Auflicht (540a) eine in Vorderansicht und in Rückansicht unterschiedliche optische Wirkung ausbilden.

2. Mehrschichtkörper (1, 7) nach Anspruch 1,
**dadurch gekennzeichnet,**
**dass** die Ebenen (31) in dem mindestens ersten Teilbereich (52a, 71a) mit der Schichtebene (33) einen Winkel α mit 45° < α < 90° einschließen, vorzugsweise nahezu senkrecht zu der Schichtebene (33) angeordnet sind, so dass die optisch wirkenden Elemente im Durchlicht (540d) eine in Vorderansicht und in Rückansicht unterschiedliche optische Wirkung ausbilden.

3. Mehrschichtkörper (1, 7) nach Anspruch 2,
**dadurch gekennzeichnet,**
**dass** die Ebenen (31) in dem mindestens zweiten Teilbereich (52b, 71b) mit der Schichtebene (33) einen Winkel von höchstens 30 Grad einschließen.

4. Mehrschichtkörper (1, 7) nach einem der vorhergehenden Ansprüche,
**dadurch gekennzeichnet,**
**dass** die Ebenen (31) in dem mindestens ersten Teilbereich (52a, 71a) in Bezug auf die Ebenen (31) in dem mindestens zweiten Teilbereich (52b, 71 b) so angeordnet sind, dass der Schnittwinkel der Ebenen (31) in dem mindestens ersten Teilbereich (52a, 71 a) mit den Ebenen (31) in dem mindestens zweiten Teilbereich (52b, 71b) mindestens 1 Grad beträgt.

5. Mehrschichtkörper (1, 7) nach einem der vorhergehenden Ansprüche,
**dadurch gekennzeichnet,**
**dass** jeder der Teilbereiche (52a, 52b, 71 a, 71 b) in der Schichtebene (33) eine Flächenausdehnung aufweist, die in jeder Richtung innerhalb der Schichtebene (33) mindestens 20 µm beträgt, wobei vorzugsweise diese minimale Flächenausdehnung 300 µm beträgt.

6. Mehrschichtkörper (1, 7) nach einem der vorhergehenden Ansprüche,
**dadurch gekennzeichnet,**
**dass** das optisch wirkende Element des mindestens ersten Teilbereichs (52a, 71a) und das optisch wirkende Element des mindestens zweiten Teilbereichs (52b, 71b) als Volumenhologramme ausgebildet sind, wobei die Braggschen Ebenen jedes der Volumenhologramme durch die Vielzahl der periodisch angeordneten, ein optisch wirkendes Element ausbildenden, durch Brechzahlvariation gebildeten Knoten ausgebildet sind.

7. Mehrschichtkörper (1, 7) nach einem der vorhergehenden Ansprüche,
**dadurch gekennzeichnet,**
**dass** der mindestens erste und zweite Teilbereich (52a, 52b, 71 a, 71 b) so miteinander verschachtelt sind, dass die transparente Schicht (12, 52, 720) mindestens zwei unterschiedliche Bildinformationen als volumenholografisches Abbild beinhaltet.

8. Mehrschichtkörper (1, 7) nach Anspruch 7,
**dadurch gekennzeichnet,**
**dass** der mindestens erste und zweite Teilbereich (52a, 52b, 71 a, 71 b) in Form eines Linienrasters oder Flächenrasters ineinander verschachtelt sind.

9. Mehrschichtkörper (1, 7) nach einem der Ansprüche 7 und 8,
**dadurch gekennzeichnet,**
**dass** die Teilbereiche (52a, 52b, 71a, 71b) mit den mindestens zwei Bildinformationen in einem Raster mit einer Rasterweite von kleiner 300 µm, vorzugsweise 50 µm, angeordnet sind.

10. Mehrschichtkörper (1, 7) nach einem der vorhergehenden Ansprüche,
**dadurch gekennzeichnet,**
**dass** die transparente Schicht (12, 52, 720) eine Schichtdicke (32) zwischen 5 µm und 20 µm aufweist.

11. Mehrschichtkörper (1, 7) nach einem der vorhergehenden Ansprüche,
**dadurch gekennzeichnet,**
**dass** die transparente Schicht (12, 52, 720) teilweise in einem opaken, vorzugsweise dunkel eingefärbten, Bereich (740) des Trägersubstrats (11, 58, 750) angeordnet ist.

12. Mehrschichtkörper (1, 7) nach einem der vorhergehenden Ansprüche,
**dadurch gekennzeichnet,**
**dass** die transparente Schicht (12, 52, 720) als Teil eines Folienaufbaus ausgebildet ist, der ein oder mehrere Elemente aus der folgenden Gruppe aufweist, wobei die ein oder mehreren Elemente die mindestens ersten und zweiten Teilbereiche (52a, 52b, 71 a, 71 b) nicht oder zumindest teilweise überdecken: ein diffraktives OVD, vorzugsweise eine diffraktive Reliefstruktur, ein farbverschiebendes optisches Element, ein polarisierendes optisches Element, eine diffraktive oder refraktive Linse, eine Anordnung diffraktiver oder refraktiver Mikrolinsen, eine Farbfolie, eine Antenne, eine Solarzelle, eine Anzeige, eine elektronische Schaltung.

13. Mehrschichtkörper (1, 7) nach einem der vorhergehenden Ansprüche,
**dadurch gekennzeichnet,**
**dass** die transparente Schicht (12, 52, 720) als Teil einer Laminierfolie und/oder Übertragungslage ausgebildet ist, die streifen- oder patchförmig auf dem Trägersubstrat (11, 58, 750) appliziert ist.

14. Mehrschichtkörper (1, 7) nach einem der vorhergehenden Ansprüche,
**dadurch gekennzeichnet,**
**dass** die transparente Schicht (12, 52, 720) als Photopolymerschicht ausgebildet ist.

## Claims

1. Multilayer body (1, 7), in particular a security document having a carrier substrate (11, 58, 750) and having a transparent layer (12, 52, 720), which is arranged at least partially in a window (15, 70) or in a transparent region of the carrier substrate (11, 58, 750),
**characterised in that**,
the transparent layer (12, 52, 720) has at least one first (52a, 71a) and one second partial region (52b, 71b) with a varying refractive index, which are arranged alongside each other in the layer plane (33) fixed by the transparent layer (12, 52, 720), wherein the at least first (52a, 71a) and the at least second partial region (52b, 71b) are arranged at least partially in the window (15, 70) or in the transparent region of the carrier substrate (11, 58, 750);
each of the partial regions (52a, 52b, 71a, 71b) has a plurality of periodically arranged nodes forming an element with an optical effect and formed by refractive index variation, which are arranged in planes (31) running substantially parallel to each other; and that the planes (31) in the at least first partial region (52a, 71a) are not parallel to the planes (31) in the at least second partial region (52b, 71b) and that, at least in one of the partial regions (52a, 52b, 71a, 71b), the planes (31) run neither parallel nor perpendicular to the layer plane (33), such that both the incident light (540) falling onto both the front side and rear side of the multilayer body (1, 7) is diffracted by the elements that have an optical effect and the elements form an optical effect that differs in the front view and in the rear view in the incident light (540a).

2. Multilayer body (1, 7) according to claim 1,
**characterised in that**,
the planes (31) in the at least first partial region (52a, 71a) include an angle α of 45° < α < 90° to the layer plane (33), preferably being arranged virtually perpendicular to the layer plane (33), such that the elements with an optical effect form, in the transmitted light (540d), a different optical effect in the front view and the rear view.

3. Multilayer body (1, 7) according to claim 2,
**characterised in that**,
the planes (31) in the at least second partial region (52b, 71b) include an angle to the layer plane (33) of 30° maximum.

4. Multilayer body (1, 7) according to one of the preceding claims,
**characterised in that**,
the planes (31) in the at least first partial region (52a, 71a) are arranged with respect to the planes (31) in the at least second partial region (52b, 71b) in such a way that the angle of intersection of the planes (31) in the at least first partial region (52a, 71a) to the planes (31) in the at least second partial region (52b, 71b) is at least 1°.

5. Multilayer body (1, 7) according to one of the preceding claims,
**characterised in that**,
each of the partial regions (52a, 52b, 71a, 71b) in the layer plane (33) has a surface area that is at least 20µm in each direction within the layer plane (33), wherein this minimum surface area is preferably 300µm.

6. Multilayer body (1, 7) according to one of the preceding claims,
**characterised in that**,
the element with an optical effect of the at least first partial region (52a, 71a) and the element with an optical effect of the at least second partial region (52b, 71b) are designed as volume holograms, wherein the Bragg planes of each of the volume holograms are formed by the plurality of periodically arranged nodes that are formed by refractive index variation forming an element with an optical effect.

7. Multilayer body (1, 7) according to one of the preceding claims,
**characterised in that**,
the at least first and second partial region (52a, 52b, 71a, 71b) are interlaced with each other in such a way that the transparent layer (12, 52, 720) contains at least two different pieces of image information from the volume holographic image.

8. Multilayer body (1, 7) according to claim 7,
**characterised in that**,
the at least first and second partial region (52a, 52b, 71a, 71b) are interlaced within each other in the form of a line grid or profile grid.

9. Multilayer body (1, 7) according to one of claims 7 and 8,
**characterised in that**,
the partial regions (52a, 52b, 71a, 71b) with the at least two pieces of image information are arranged in a grid with a grid width of below 300µm, preferably 50µm.

10. Multilayer body (1, 7) according to one of the preceding claims,
**characterised in that**,
the transparent layer (12, 52, 720) has a layer thickness (32) between 5µm and 20µm.

11. Multilayer body (1, 7) according to one of the preceding claims,
**characterised in that**,
the transparent layer (12, 52, 720) is arranged partially in an opaque, preferably dark-coloured, region (740) of the carrier substrate (11, 58, 750).

12. Multilayer body (1, 7) according to one of the preceding claims,
**characterised in that**,
the transparent layer (12, 52, 720) is designed as part of a film structure, which has one or more elements from the following group, wherein the one or more elements do not or at least partially cover the at least first and second partial regions (52a, 52b, 71a, 71b): a diffractive OVD, preferably a diffractive relief structure, a colour-shifting optical element, a polarising optical element, a diffractive or refractive lens, an arrangement of diffractive or refractive microlenses, a colour film, an antenna, a solar cell, a display, an electronic circuit.

13. Multilayer body (1, 7) according to one of the preceding claims,
**characterised in that**,
the transparent layer (12, 52, 720) is designed as part of a laminating foil and/or transfer layer, which is applied in stripes or patches on the carrier substrate (11, 58, 750).

14. Multilayer body (1, 7) according to one of the preceding claims,
**characterised in that**,
the transparent layer (12, 52, 720) is designed as a photopolymer layer.

## Revendications

1. Corps multicouche (1, 7), en particulier document de sécurité comprenant un substrat de support (11, 58, 750) et comprenant une couche transparente (12, 52, 720), qui est disposée au moins en partie dans une fenêtre (15, 70) ou dans une zone transparente du substrat de support (11, 58, 750),
**caractérisé en ce que**
la couche transparente (12, 52, 720) présente au moins une première zone partielle (52a, 71a) et une deuxième zone partielle (52b, 71b) à indice de réfraction variable, lesquelles sont disposées l'une à côté de l'autre dans le plan de couche (33) s'étendant depuis la couche transparente (12, 52, 720), dans lequel la au moins une première zone partielle (52a, 71a) et la au moins une deuxième zone partielle (52b, 71b) sont disposées au moins en partie dans la fenêtre (15, 70) ou dans la zone transparente du substrat de support (11, 58, 750),
que chacune des zones partielles (52a, 52b, 71a, 71b) présente une pluralité de noeuds disposés périodiquement, constituant un élément à effet optique, formés par une variation de l'indice de réfraction, lesquels noeuds sont disposés dans des plans (31) s'étendant essentiellement de manière parallèle les uns par rapport aux autres, et **en ce que** les plans (31) de la au moins une première zone partielle (52a, 71a) ne sont pas parallèles aux plans (31) de la au moins une deuxième zone partielle (52b, 71b), et **en ce qu'**au moins dans une des zones partielles (52a, 52b, 71a, 71b) les plans (31) ne s'étendent ni de manière parallèle ni de manière perpendiculaire par rapport au plan de couche (33) de sorte que la lumière incidente (540) tant sur le verso que sur le recto du corps multicouche (1, 7) est diffractée par les éléments à effet optique et que les éléments ont, en lumière incidente (540a), un effet optique différent sur le recto et sur le verso.

2. Corps multicouche (1, 7) selon la revendication 1,
**caractérisé en ce que**
les plans (31) forment avec le plan de couche (33) un angle α, où 45° < α < 90°, dans la au moins une première zone partielle (52a, 71a), **en ce qu'**ils sont de préférence disposés quasiment de manière perpendiculaire par rapport au plan de couche (33), de sorte que les éléments à effet optique ont, en lumière transmise (540d), un effet optique différent sur le recto et sur le verso.

3. Corps multicouche (1, 7) selon la revendication 2,
**caractérisé en ce que**
les plans (31) forment dans la au moins une deuxième zone partielle (52b, 71b) avec le plan de couche (33) un angle de 30 degrés maximum.

4. Corps multicouche (1, 7) selon l'une quelconque des revendications précédentes,
**caractérisé en ce que**
les plans (31) sont disposés dans la au moins une première zone partielle (52a, 71a) par rapport aux plans (31) dans la au moins une deuxième zone partielle (52b, 71b), de telle manière que l'angle d'intersection formé par les plans (31) de la au moins une première zone partielle (52a, 71a) et par les plans (31) de la au moins une deuxième zone partielle (52b, 71b) est au moins égal à 1 degré.

5. Corps multicouche (1, 7) selon l'une quelconque des revendications précédentes,
**caractérisé en ce que**
chacune des zones partielles (52a, 52b, 71a, 71b) présente dans le plan de couche (33) une extension de surface qui a une valeur au moins de 20 µm dans chaque direction à l'intérieur du plan de couche (33), dans lequel de préférence ladite extension de surface minimale est de 300 µm.

6. Corps multicouche (1, 7) selon l'une quelconque des revendications précédentes,
**caractérisé en ce que**
l'élément à effet optique de la au moins une première zone partielle (52a, 71a) et l'élément à effet optique de la au moins une deuxième zone partielle (52b, 71b) se présentent sous la forme d'hologrammes volumiques, dans lesquels les plans de Bragg de chaque hologramme volumique sont réalisés par la pluralité des noeuds disposés périodiquement, constituant un élément à effet optique, formés par la variation de l'indice de réfraction.

7. Corps multicouche (1, 7) selon l'une quelconque des revendications précédentes,
**caractérisé en ce que**
la au moins une première zone partielle et la au moins une deuxième zone partielle (52a, 52b, 71a, 71b) sont emboîtées les unes dans les autres, de telle manière que la couche transparente (12, 52, 720) comporte au moins deux informations différentes relatives à l'image en tant que reproduction holographique volumique.

8. Corps multicouche (1, 7) selon la revendication 7,
**caractérisé en ce que**
la au moins une première zone partielle et la au moins une deuxième zone partielle (52a, 52b, 71a, 71b) sont emboîtées l'une dans l'autre sous la forme d'une trame à lignes ou d'une trame à plat.

9. Corps multicouche (1, 7) selon l'une quelconque des revendications 7 et 8,
**caractérisé en ce que**
les zones partielles (52a, 52b, 71a, 71b) comprenant les deux informations relatives à l'image ou plus sont disposées dans une trame présentant une largeur inférieure à 300 µm, de préférence à 50 µm.

10. Corps multicouche (1, 7) selon l'une quelconque des revendications précédentes,
**caractérisé en ce que**
la couche transparente (12, 52, 720) présente une épaisseur de couche (32) comprise entre 5 µm et 20 µm.

11. Corps multicouche (1, 7) selon l'une quelconque des revendications précédentes,
**caractérisé en ce que**
la couche transparente (12, 52, 720) est disposée en partie dans une zone (740) opaque, de préférence de couleur sombre, du substrat de support (11, 58, 750).

12. Corps multicouche (1, 7) selon l'une quelconque des revendications précédentes,
**caractérisé en ce que**
la couche transparente (12, 52, 720) se présente sous la forme d'une partie d'une structure pelliculaire, qui présente un ou plusieurs éléments issus du groupe qui suit, dans lequel l'élément ou plusieurs éléments ne recouvrent pas ou recouvrent au moins en partie la au moins une première zone partielle et la au moins une deuxième zone partielle (52a, 52b, 71a, 71b) : un OVD diffractif, de préférence une structure en relief diffractive, un élément optique distordant la couleur, un élément optique polarisant, une lentille diffractive ou réfractive, un ensemble de microlentilles diffractives ou réfractives, un film de couleur, une antenne, une cellule solaire, un système d'affichage, un dispositif de commutation électronique.

13. Corps multicouche (1, 7) selon l'une quelconque des revendications précédentes,
**caractérisé en ce que**
la couche transparente (12, 52, 720) se présente sous la forme d'une partie d'un film de laminage et/ou d'une couche de transfert, lequel/laquelle est appliqué(e) sur le substrat de support (11, 58, 750) de manière à présenter une forme de bande ou de patch.

14. Corps multicouche (1, 7) selon l'une quelconque des revendications précédentes,
**caractérisé en ce que**
la couche transparente (12, 52, 720) se présente sous la forme d'une couche de photopolymère.
